# EUROPEAN PATENT APPLICATION

(11) **EP 4 671 954 A1**
(43) Date of publication of application: **31.12.2025**
(21) Application number: 25184494.0
(22) Date of filing: 23.06.2025
(51) Int. Cl.: G06F 3/06, G06F 12/00, G06F 12/0868, G06F 13/16, G06F 13/18, G06F 12/02

(54) **STORAGE CONTROLLER AND OPERATION METHOD THEREOF**

(30) Priority: 26.06.2024 KR 20240084017; 07.10.2024 KR 20240135636
(71) Applicant: Samsung Electronics Co., Ltd., Suwon-si, Gyeonggi-do 16677 (KR)
(72) Inventor: UHM, Junyong, 16677 Suwon-si, Gyeonggi-do (KR); JO, Jeongmin, 16677 Suwon-si, Gyeonggi-do (KR); KIM, Jaesub, 16677 Suwon-si, Gyeonggi-do (KR); KIM, Jung-Gyu, 16677 Suwon-si, Gyeonggi-do (KR); SHIN, Kyung-Ho, 16677 Suwon-si, Gyeonggi-do (KR); AHN, Jaeguk, 16677 Suwon-si, Gyeonggi-do (KR)
(74) Representative: Kuhnen & Wacker Patent- und Rechtsanwaltsbüro PartG mbB

(57) **Abstract**

According to an embodiment of present disclosure, a storage controller (110) configured to communicate with a host device (10) may be provided. The storage controller (110) may include a completion buffer that is configured to store one or more completions (CPLT), and transmit the one or more completions (CPLT) to the host device (10); a first core that is configured to generate a first completion and a first trim load value both corresponding to a first trim command received from the host device (10); and a trim performance control circuit that is configured to delay transmission of the first completion to the completion buffer based on the first trim load value, with the trim performance control circuit being connected to both the completion buffer and the first core.

## Description

### BACKGROUND

### 1. Field

The present disclosure relates to a semiconductor storage device. More specifically, the present disclosure relates to a storage controller controlling trim performance in a multi-tenant storage system and an operation method thereof.

### 2. Description of the Related Art

Flash memory-based storage devices may perform read/write operations in unit of page and erase operations in unit of block. Because of these differences in read/write and erase operation units, the storage controller of the flash memory-based storage device typically manages the mapping between logical addresses managed by host and physical addresses managed within the storage device.

A host device may issue a trim command to delete data stored at a specific logical address. The storage controller may perform a trim operation in response to the trim command. For example, a storage controller may deallocate a logical address corresponding to the trim command from a physical address. In this case, the host device may store new data at the deallocated logical address. Meanwhile, the storage controller may perform a garbage collection operation to secure storage space corresponding to the deallocated physical address.

However, while the storage controller performs the trim operation, the input/output performance of the storage device may be deteriorated. For example, as more of the storage controller's resources are allocated to processing trim commands, the I/O performance of the storage device may be deteriorated.

### SUMMARY

The present disclosure is intended to solve the technical problems described above. More specifically, the present disclosure relates to a storage device controlling trim performance and an operation method thereof.

According to an embodiment of present disclosure, a storage controller configured to communicate with a host device may be provided. The storage controller may include: a completion buffer that is configured to store one or more completions, and transmit the one or more completions to the host device; a first core that is configured to generate a first completion and a first trim load value, both corresponding to a first trim command received from the host device; and a trim performance control circuit that is configured to delay transmission of the first completion to the completion buffer based on the first trim load value, with the trim performance control circuit being connected to both the completion buffer and the first core.

According to an embodiment of present disclosure, an operation method of a storage controller may be provided. The operation method may include: receiving a trim command from a host device; generating a completion and one or more trim information records associated with the trim command; identifying a trim performance control value corresponding to the one or more trim information records; and delaying transmission of the completion to the host device for a delay period determined based on the trim performance control value.

According to an embodiment of present disclosure, a storage controller may be provided. The storage controller may include: a host interface circuit configured for communication between the storage controller and a host device; and a processor configured to: generate a first completion associated with an input/output command and generate a second completion associated with a trim command; transmit the first completion to the host interface circuit through a first path; and transmit the second completion to the host interface circuit through a second path different from the first path.

### BRIEF DESCRIPTION OF DRAWINGS

FIG. 1 is a block diagram illustrating a storage system according to an embodiment of the present disclosure.
FIG. 2 is a block diagram illustrating the storage controller according to an embodiment of the present disclosure.
FIG. 3 is a detailed view of an aspect of FIG. 2 according to an embodiment of the present disclosure.
FIG. 4 is an exemplary illustration of a trim performance control table of FIG. 2 according to an embodiment of the present disclosure.
FIG. 5 is an illustration of an example packet structure of the trim command of FIG. 1.
FIG. 6 is a diagram illustrating a portion of the host memory of FIG. 1.
FIG. 7 is a diagram illustrating logical address ranges of FIG. 6.
FIG. 8 is a diagram illustrating an exemplary operation of the storage system of FIG. 1 according to an embodiment.
FIG. 9 is a diagram illustrating the operation of a storage controller based on a trim command according to an embodiment.
FIG. 10 is a diagram illustrating the operation of a storage controller based on input/output commands according to an embodiment.
FIG. 11 is a diagram illustrating the operation of a storage controller based on a trim command according to an embodiment.
FIG. 12 is a block diagram illustrating a configuration of the trim performance control circuit of FIG. 9 and FIG. 11.
FIG. 13 is a flowchart illustrating the operation of a storage controller according to an embodiment of the present disclosure.
FIG. 14 is a diagram illustrating the operation of a storage controller based on a trim command according to an embodiment.
FIG. 15 is a diagram illustrating the operation of a storage controller based on a trim command according to an embodiment.
FIG. 16 is a diagram illustrating the operation of the host device of FIG. 1 according to an embodiment.
FIG. 17 is a diagram exemplarily illustrating the operation of each tenant of FIG. 16 due to a delay in receiving completion for a trim command.
FIG. 18 is a drawing exemplarily illustrating the operation of the supervisor of FIG. 16 due to a delay in receiving completion for a trim command.

### DETAILED DESCRIPTION

Hereinafter, various embodiments will be described in detail and clearly to such an extent that an ordinary one in the art easily implements the present disclosure. Specific details such as detailed components and structures are merely provided to assist the overall understanding of the various embodiments. Therefore, it should be apparent to those skilled in the art that various changes and modifications of the embodiments described herein may be made. Moreover, descriptions of well-known functions and structures are omitted for clarity and brevity. In the following drawings or in the detailed description, configurations may be connected with any other components except for components illustrated in a drawing or described in the detailed description. The terms described below are terms defined in consideration of the functions of the present disclosure and are not limited to a specific function. The definitions of the terms should be determined based on the contents throughout the specification.

Components that are described in the detailed description with reference to the terms "driver", "block", etc. will be implemented with software, hardware, or a combination thereof. For example, the software may be a machine code, firmware, an embedded code, and application software. For example, the hardware may include an electrical circuit, an electronic circuit, a processor, a computer, integrated circuit cores, a pressure sensor, a microelectromechanical system (MEMS), a passive element, or a combination thereof.

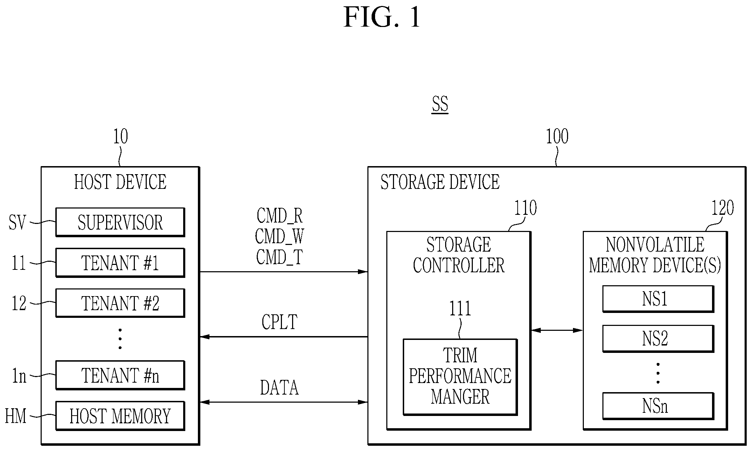

FIG. 1 is a block diagram showing a storage system according to an embodiment of the present disclosure. Referring to FIG. 1, a storage system SS may include a host device 10 and a storage device 100. In an embodiment, the storage system SS may be included in one of various information processing devices such as a personal computer, a laptop computer, a server, a workstation, a smartphone, a tablet PC, and the like.

The host device 10 may access the storage device 100 by issuing various types of commands CMD.

The storage device 100 may include a storage controller 110 and a nonvolatile memory device 120.

The storage controller 110 may control the operation of the storage device 100 in response to the command CMD provided from the host device 10. For example, the storage controller 110 may provide data DATA stored in the nonvolatile memory device 120 to the host device 10 in response to a read command CMD_R; and may store data DATA provided from the host device 10 in the nonvolatile memory device 120 based on a write command CMD _W.

The storage controller 110 may process the command CMD provided from the host device 10 and then return a completion CPLT (e.g., a signal) for the processed command CMD to the host device 10. For example, the storage controller 110 may provide data DATA corresponding to a read command CMD_R to the host device 10, and then return a completion CPLT corresponding to the read command CMD_R to the host device 10. In embodiments the storage controller 110 may store data DATA corresponding to a write command CMD_W in the nonvolatile memory device 120, and then return a completion CPLT corresponding to the write command CMD_W to the host device 10. The host device 10 may be able to recognize the processing result of the command CMD based on the completion CPLT.

In an embodiment, the storage device 100 and the host device 10 may communicate based on a PCIe (Peripheral Component Interconnect express) interface or a PCIe-based NVMe (nonvolatile memory express) interface. However, the scope of the present disclosure is not limited to the specific communication protocol used for communication between the storage device 100 and the host device 10.

The nonvolatile memory device 120 may include first to n-th namespaces NS1 to NSn. The storage controller 110 may allocate different namespace identifier NSID to each of the first to n-th namespaces NS1 to NSn. For example, the first to n-th namespaces NS1 to NSn may be allocated namespace identifiers '1' to 'n', respectively. In this case, the host device 10 may access a specific namespace NS by providing, to the storage controller 110, a namespace identifier NSID corresponding to the namespace NS.

The storage device 100 may be configured to support multi-host or multi-tenant. For example, the storage system SS may be implemented as a multi-tenant storage system with a host device that supports multiple tenants.

The host device 10 may include a supervisor SV and first to n-th tenants 11 to 1n. Each of the supervisor SV and the first to n-th tenants 11 to 1n may independently access the storage device 100. For example, each of the supervisor SV and the first to n-th tenants 11 to 1n may independently issue a command CMD, which may be one of a trim command CMD_T, read command CMD_R, and/or write command CMD_W.

In an embodiment, each of the supervisor SV and the first to n-th tenants 11-1n may be a single or multi-core processor included in different computing node. In the same or another embodiment, at least some of the supervisor SV and the first to n-th tenants 11-1n may be different processors included in same computing node. However, the scope of the present disclosure is not limited thereto, and each of the supervisor SV and the first to n-th tenants 11 to 1n may be a processor configured to process different applications or may be virtual machines different each other.

The storage controller 110 may allocate different storage space to each of the first to n-th tenants 11 to 1n. For example, the storage controller 110 may allocate the first to n-th namespaces NS1 to NSn to the first to n-th tenants 11 to 1n, respectively. However, the scope of the present disclosure is not limited thereto. For example, a storage controller 110 may allocate a plurality of namespaces NS to one tenant.

Each of the first to n-th tenants 11-1n may only access the allocated namespace NS. For example, a first tenant 11 may access a first namespace NS1 by providing a command CMD including a namespace identifier NSID '1' to the storage controller 110, and a second tenant 12 may access a second namespace NS2 by providing a command CMD including a namespace identifier NSID '2' to the storage controller 110. However, the scope of the present disclosure is not limited thereto.

The host device 10 may access the storage device 100 based on logical addresses. For example, each of the supervisor SV and the first to n-th tenants 11 to 1n may provide a command CMD indicating a logical address to the storage controller 110.

On the other hand, the storage device 100 may manage data stored in the nonvolatile memory device 120 based on physical address. For example, the storage controller 110 may perform read operations and program operations on the nonvolatile memory device 120 based on physical address.

Accordingly, the storage controller 110 may manage logical addresses and physical addresses separately. For example, the storage controller 110 may manage an address mapping table that indicates mapping information between logical addresses and physical addresses.

Each of the first to n-th tenants 11 to 1n may issue a trim command CMD_T to delete data stored at a specific logical address. The storage controller 110 may perform a trim operation in response to the trim command CMD_T. For example, the storage controller 110 may deallocate a logical address indicated by the trim command CMD_T from a physical address, and then return a completion CPLT for the trim command CMD_T to the host device 10. That is, the storage controller 110 may invalidate the mapping between the logical address and the physical address indicated by the trim command CMD_T. In this case, new data may be stored in the deallocated logical address. Meanwhile, the storage controller 110 may secure storage space by performing a garbage collection operation for the corresponding physical address at a later time.

In the following, for a more concise explanation, an embodiment will be described in which the trim command CMD_T is implemented as a dataset management command, which is one of the NVM (non-volatile memory) commands. However, the scope of the present disclosure is not limited to the specific manner in which the trim command CMD_T is implemented.

In an embodiment, the trim command CMD_T may be referred to by various terms, such as a deallocation command, an unmap command, etc. However, the scope of the present disclosure is not limited thereto.

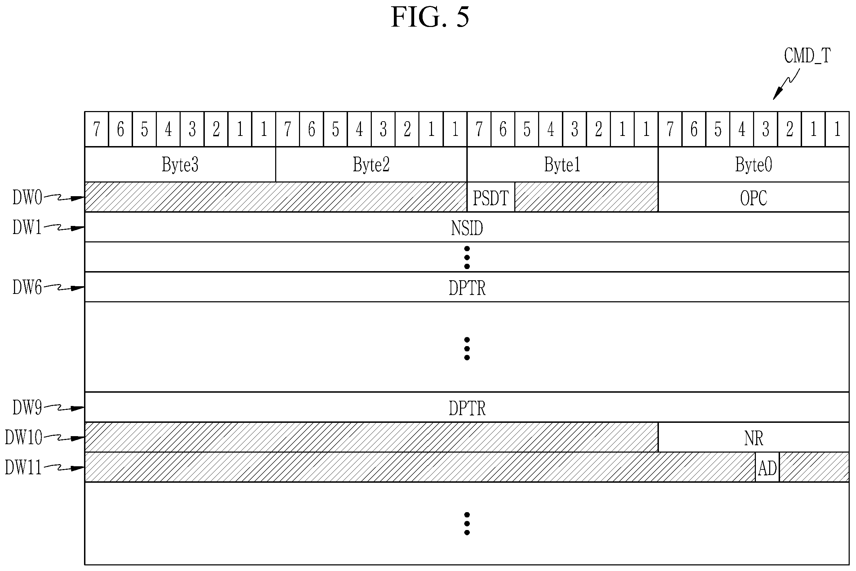

A processing load of the storage controller 110 for one trim command CMD_T (hereinafter it may be referred to as trim load TL) may be different for each trim command CMD_T. For example, the host device 10 may include host memory HM. The storage controller 110 may fetch a logical address range list (hereinafter it may be referred to as "LST") within the host memory HM based on a trim command CMD_T. The storage controller 110 may perform a trim operation on logical address ranges (hereinafter it may be referred to as "RNG_LA") indicated by the logical address range list LST. That is, since the processing load of the storage controller 110 for one trim command CMD_T may vary according to the logical address range list LST stored in the host memory HM, the processing load of the storage controller 110 for the trim command CMD_T may not be indicated in a packet of the trim command CMD_T. The specific manner in which the trim load TL for each trim command CMD_T is determined is described in more detail with reference to FIGS. 5 to 7 below.

The storage controller 110 may process the plurality of commands CMDs provided from the supervisor SV and the first to n-th tenants 11 to 1n in parallel. For example, the storage controller 110 may process a trim command CMD_T issued from one tenant while processing a read command CMD_R or a write command CMD_W issued from another tenant.

The resources of the storage controller 110 used to process the trim command CMD_T may overlap with the resources of the storage controller 110 used to process the read command CMD_R or the write command CMD_W. In this case, as more resources of the storage controller 110 are used to process the trim command CMD_T (for example, when the storage controller 110 processes the trim command CMD_T with a large trim load TL), resources to be used to process the read command CMD_R or the write command CMD_W may be depleted. That is, as the resources of the storage controller 110 are concentrated on processing the trim command CMD_T, the processing performance for the read command CMD_R and write command CMD_W (e.g., input/output performance of the storage device 100) of the storage controller 110 may deteriorate. In other words, a trim command CMD_T issued from a specific tenant may degrade the processing performance of read commands CMD_R and write commands CMD_W issued from other tenants.

The supervisor SV may manage the quality of service QoS for each of the first to n-th tenants 11 to 1n. For example, the supervisor SV may manage QoS for each of the first to n-th tenants 11 to 1n in various ways, such as adjusting priority of transmitting commands CMDs issued from each of the first to n-th tenants 11 to 1n to the storage controller 110.

The supervisor SV may adjust the timing of transmitting a specific command CMD to the storage controller 110 based on a processing load of the specific command CMD and the QoS for the tenant who issued the command CMD. For example, the supervisor SV may identify a processing load of the storage controller 110 for a specific command CMD based on a packet of the command CMD, and may adjust the timing of transmitting the command CMD to the storage controller 110 with considering the processing load and the QoS required by the tenant who issued the command CMD. However, as described above, the packet of the trim command CMD_T may not directly indicate the processing load for the trim command CMD_T. Accordingly, it may be difficult for the supervisor SV to determine when to transmit the trim command CMD_T to the storage controller 110 with considering the processing load of the trim command CMD_T and the QoS required by the tenant that issued the trim command CMD_T. Accordingly, even when a trim command CMD_T with a large trim load TL is issued by a tenant requesting low QoS, the resources of the storage controller 110 may be over-occupied for processing the trim command CMD_T, and thus, processing of a command (e.g., a read/write command) issued by other tenants requesting high QoS may be delayed.

The storage controller 110 according to an embodiment of the present disclosure may include a trim performance manager 111 (the trim performance manager 111 may also be referred to herein as trim performance management circuit 111). The trim performance manager 111 may control the processing performance of trim command CMD_T (hereinafter it may be referred to as trim performance TP) of the storage controller 110. For example, the trim performance manager 111 may control when to transmit a completion CPLT for the trim command CMD_T to the host device 10. In this case, the trim performance TP of the storage controller 110 perceived from the perspective of the tenant who issued the trim command CMD_T may be controlled.

The trim performance manager 111 may control the trim performance TP based on one or more trim information records for the trim command CMD_T (e.g., a NSID corresponding to the trim command CMD_T or a trim load TL, etc.). In the following, for a more concise explanation, an embodiment in which a trim performance manager 111 controls a trim performance TP based on a namespace identifier NSID and a trim load TL corresponding to a trim command CMD_T will be representatively described. However, the scope of the present disclosure is not limited thereto, and the trim performance manager 111 may also control the trim command processing performance based on various types of trim information records, such as an identifier of a storage controller that process the trim command CMD_T, a stream corresponding to the trim command CMD_T, and the like.

The trim performance manager 111 may individually control the trim performance TP for the trim commands CMT_T issued from each of the first to n-th tenants 11 to 1n. For example, the trim performance manager 111 may control trim performance differently for each namespace NS corresponding to each trim command CMT_T. For a more detailed example, if a first tenant 11 requests low QoS, the trim performance manager 111 may process a trim command CMT_T for the first namespace NS1 allocated to the first tenant 11 with low trim performance. When a second tenant 12 requires high QoS, the trim performance manager 111 may process a trim command CMT_T for the second namespace NS2 allocated to the second tenant 12 with high trim performance.

In other words, the trim performance manager 111 may delay transmission of a completion CPLT for a trim command CMD_T issued from a specific tenant to the host device 10 by a first time length; and may delay transmission of a completion CPLT for a trim command CMD_T issued from another tenant by a second time length that is different from the first time length. For example, the trim performance manager 111 may delay transmission of a completion CPLT for a trim command CMT_T corresponding to a first namespace NS1 to a host device 10 by a first time length; and may delay transmission of a completion CPLT for a trim command CMT_T corresponding to a second namespace NS2 to a host device 10 by a second time length that is shorter than the first time length.

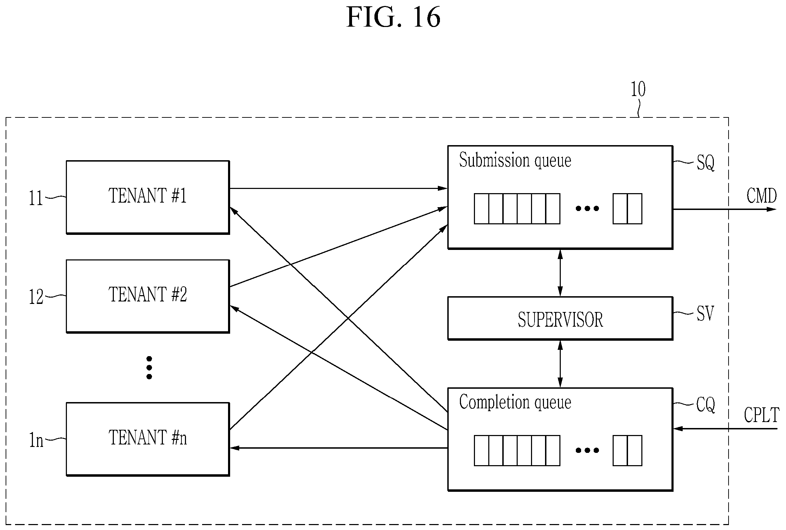

Therefore, according to an embodiment of the present disclosure, the time taken for the completion CPLT, corresponding to the trim command CMD_T issued from each tenant, to be provided to the host device 10 may be different. In this case, the phenomenon of over-occupying of resources of the storage controller 110 by trim commands CMD_T issued from tenants requesting low QoS may be minimized. That is, according to an embodiment of the present disclosure, even if the supervisor SV does not directly control the timing at which the trim command CMD_T is transmitted to the storage controller 110, the trim performance TP for the trim command CMD_T may be controlled according to the QoS for the tenant that issued the trim command CMD_T. The manner in which the phenomenon of over-occupancy of resources of a storage controller 110 by trim commands CMD_T issued from a tenant requesting low QoS is minimized as the completion CPLT for the trim command CMD_T is transmitted with delay to the host device 10 is explained in more detail with reference to FIGS. 16 to 18 below.

The trim performance manager 111 may control the trim performance of the storage controller 110 differently for processing load of each of the trim command CMD_T. That is, the trim performance manager 111 may control the trim performance TP differently for trim load TL corresponding to each trim command CMT_T. For example, if the first trim command causes a low trim load TL, the trim performance manager 111 may not limit the trim performance TP of the storage controller 110 to process the first trim command. On the other hand, if the second trim command causes a high trim load TL, the trim performance manager 111 may limit the trim performance of the storage controller 110 to process the second trim command. In this case, the phenomenon of the storage controller 110's resources being occupied excessively to process a trim command CMD_T that causes a high trim load TL may be prevented. However, the scope of the present disclosure is not limited thereto.

In an embodiment, the trim performance manager 111 may determine a level to control the trim performance TP based on a combination of a namespace NS and a trim load TL for a trim command CMD_T, by referring to a trim performance setup table.

In an embodiment, the trim performance control table TBL_TPC may be updated upon request of a supervisor SV.

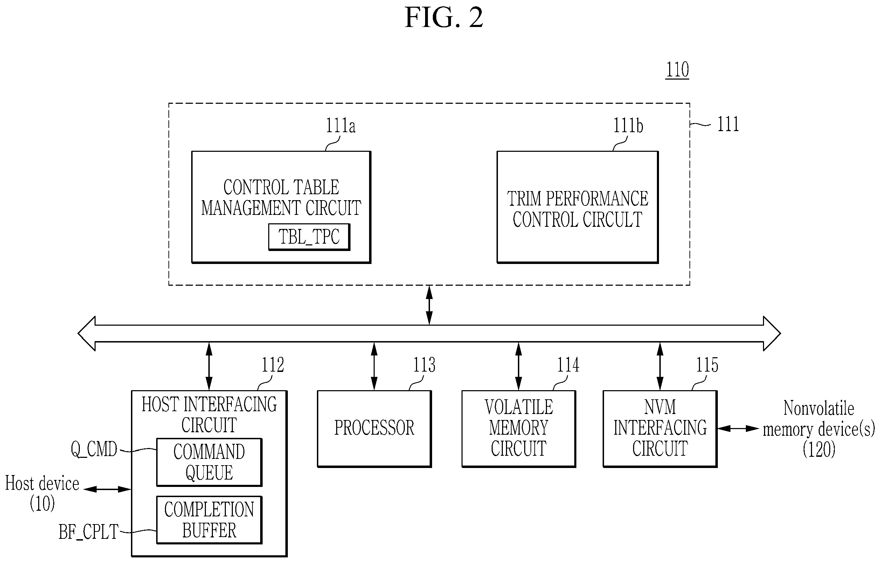

FIG. 2 is a block diagram illustrating the storage controller of FIG. 1 in more detail. Referring to FIGS. 1 and 2, the storage controller 110 may include a trim performance manager 111, a host interfacing circuit 112, a processor 113, a volatile memory circuit 114, and a nonvolatile memory interfacing circuit 115. The trim performance manager 111, host interfacing circuit 112, processor 113, volatile memory circuit 114, and nonvolatile memory interfacing circuit 115 may be connected to each other via a bus.

The trim performance manager 111 may include a control table management circuit 111a and a trim performance control circuit 111b.

The control table management circuit 111a may store a trim performance control table TBL_TPC. The trim performance control table TBL_TPC may include a plurality of trim performance control values, respectively corresponding to a plurality of combinations of namespaces NS and trim loads TL.

The control table management circuit 111a may manage the trim performance control table TBL_TPC. For example, the control table management circuit 111a may update the trim performance control table TBL_TPC based on a request from a host device 10 (e.g., a supervisor SV). That is, the trim performance control table TBL_TPC may be setup in response to the request from a host device 10 (e.g., a supervisor SV).

The trim performance control circuit 111b may control the trim performance TP of the storage controller 110 based on the trim performance control table TBL_TPC.

The host interfacing circuit 112 may support communication between the storage controller 110 and the host device 10. That is, the storage controller 110 may communicate with the host device 10 through the host interfacing circuit 112. For example, the host interfacing circuit 112 may communicate with the host device 10 based on at least one of various host interfaces, such as a PCIe interface, a NVMe interface, a SATA (Serial ATA) interface, a SAS (Serial Attached SCSI) interface, a UFS (Universal Flash Storage) interface, and the like.

The host interfacing circuit 112 may include a command queue Q_CMD and a completion buffer BF_CPLT.

The host interfacing circuit 112 may store commands CMD provided from the host device 10 in the command queue Q_CMD and may provide the commands CMD stored in the command queue Q_CMD to the processor 113.

The processor 113 may control overall operations of the storage controller 110. For example, the processor 113 may execute various types of programs, applications, and firmware running on the storage controller 110.

The processor 113 may process command CMD provided from the command queue Q_CMD. After completing processing for command CMD, the processor 113 may generate completion CPLT for the command CMD.

The host interfacing circuit 112 may store the completion CPLT provided from the processor 113 in the completion buffer BF_CPLT and may return the completion CPLT stored in the completion buffer BF_CPLT to the host device 10.

The volatile memory circuit 114 may be used as a buffer memory or operating memory of the storage controller 110. For example, the volatile memory circuit 114 may store an address mapping table indicating a mapping information between logical addresses and physical addresses.

In an embodiment, the volatile memory circuit 114 may be implemented as a SRAM (Static Random Access Memory) , a DRAM (Dynamic Random Access Memory) , or the like.

The storage controller 110 may communicate with a nonvolatile memory device 120 through a nonvolatile memory interfacing circuit 115. For example, the nonvolatile memory interfacing circuit 115 may communicate with a nonvolatile memory device 120 based on a NAND interface.

In an embodiment, each component of the trim performance manager 111 may be implemented with hardware, software, or a combination of hardware and software. For example, at least a portion of the trim performance manager 111 may be included in the storage controller 110 in a form of a separate circuit, device, or chip. Additionally, at least a portion of the trim performance manager 111 may be implemented as firmware or software modules executed by the processor 113. That is, for a more concise explanation, the trim performance manager 111 is depicted as a separate component in FIG. 2, but some or all of the trim performance manager 111 may be included in one or more of the other components.

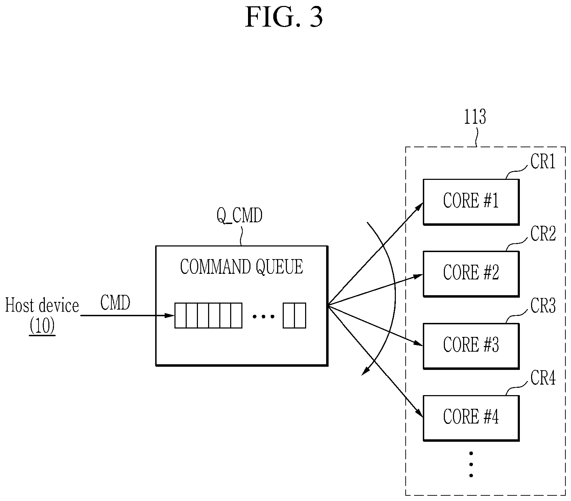

FIG. 3 is a drawing illustrating some of the configurations of FIG. 2 in more detail. Referring to FIGS. 1 to 3, a command queue Q_CMD may store commands CMD fetched from the host device 10.

The processor 113 may include a plurality of cores CR. For example, the processor 113 may include first to fourth cores CR1 to CR4.

The host interfacing circuit 112 may provide the plurality of commands CMD stored in a command queue Q_CMD to the plurality of cores CR. Each of the plurality of cores CR may independently process allocated command CMD. For example, each of the plurality of cores CR may read data stored in the nonvolatile memory device 120 in response to a read command CMD_R; program data in the nonvolatile memory device 120 in response to a write command CMD_W; and/or invalidate mapping of some logical addresses of an address mapping table stored in the volatile memory circuit 114 to physical addresses in response to a trim command CMD_T.

In an embodiment, the host interfacing circuit 112 may allocate the plurality of commands CMDs stored in a command queue Q_CMD to the plurality of cores CRs in a round-robin manner. However, the scope of the present disclosure is not limited to a specific algorithm by which the host interfacing circuit 112 distributes the plurality of commands CMDs to the plurality of cores CRs.

The resources that the storage controller 110 uses to process the trim command CMD_T may overlap with the resources that the storage controller 110 uses to process the read command CMD _R or the write command CMD_W. The present disclosure includes example(s) in which the processing performance of the storage controller 110 for a read command CMD_R or a write command CMD_W is deteriorated due to overlap of resources used for processing trim command CMD_T and resources processed for read command CMD_R or write command CMD_W. However, a person of skill in the art will know that the present disclosure is not limited thereto.

The capacity of the command queue Q_CMD may be limited, and in a full state, there may be a delay in fetching a read command CMD_R or a write command CMD_W from the host device may be delayed due to the trim commands CMD_T. For example, a command queue Q_CMD may only store a predetermined number of commands CMDs. That is, when the command queue Q_CMD is full, the host interfacing circuit 112 may not be able to fetch another command CMD from the host device 10. Therefore, when one or more trim commands CMD_T are stored in the command queue Q_CMD and the command queue Q_CMD is full-state, the timing at which the host interfacing circuit 112 fetches a read command CMD_R or a write command CMD_W from the host device 10 may be delayed due to the trim commands CMD_T.

Each of the plurality of cores CR may process only one command CMD at a time. For example, if a specific core CR is processing a trim command CMD_T, such core CR may not be able to process a read command CMD_R or a write command CMD _W.

The number of cores CR included in the processor 113 may be limited. Therefore, as more cores CR process the trim command CMD_T, the number of cores CR processing the read command CMD_R or the write command CMD_W may decrease. That is, due to processing of the trim command CMD_T, the number of read commands CMD_R or write commands CMD_W that may be processed simultaneously may decrease.

A plurality of cores CR may share a communication channel to the host memory HM. Accordingly, when a specific core CR occupies the communication channel to the host memory HM to process a trim command CMD_T, cores CR may not be able to occupy the communication channel to the host memory HM to process a read command CMD_R or a write command CMD_W. For example, if a write command CMD_W is allocated to the first core CR1, the first core CR1 may need to perform DMA (direct memory access) to data stored in the host memory HM. However, if the second core CR2 occupies the communication channel to the host memory HM to process the trim command CMD_T, the time point when the first core CR1 DMAs to the host memory HM may be delayed. That is, due to processing of a trim command CMD_T of a specific core CR, processing of a read command CMD_R or a write command CMD_W of other cores CR may be delayed.

The plurality of cores CRs may share a volatile memory circuit 114. For example, the plurality of cores CRs may share an address mapping table stored in the volatile memory circuit 114. In this case, while a specific core CR accessing the address mapping table, it may be difficult for other cores CR to access the address mapping table. For example, when a write command CMD_W is allocated to the first core CR1, the first core CR1 must update the address mapping table to indicate a mapping between the logical address provided by the host device 10 and physical address where data is newly stored. However, if the second core CR2 is performing a trim operation (e.g., invalidating the mapping of specific logical addresses to physical addresses in the address mapping table), the time point when the first core CR1 updates the address mapping table may be delayed. That is, due to processing of a trim command CMD_T of a specific core CR, processing of a read command CMD_R or write command CMD_W of other cores CR may be delayed.

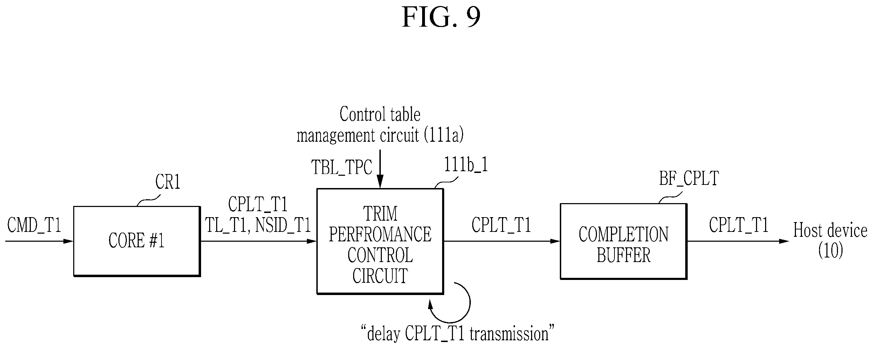

That is, as described above, the input/output performance of the storage device 100 may deteriorate as the storage controller 110 processes the trim command CMD_T. In particular, when the resources of the storage controller 110 (e.g., command queue Q_CMD capacity, number of cores, communication channel occupancy time for host memory HM, capacity of volatile memory circuit 114, etc.) are over-occupied due to trim commands CMD_T with large trim load issued from tenant requiring low QoS, processing of input/output commands issued from tenants requiring high QoS may be delayed. Therefore, when the trim performance manager 111 controls the processing performance for the trim command CMD_T based on one or more trim information records (e.g., namespace and trim load) for each trim command CMD_T, the operational efficiency of the storage device 100 may be improved. The manner in which the trim load TL of each trim command CMD_T is determined is described in more detail with reference to FIGS. 5 to 7 below; the specific manner in which the trim performance manager 111 controls the trim performance TP is described in more detail with reference to FIGS. 9 to 13 below.

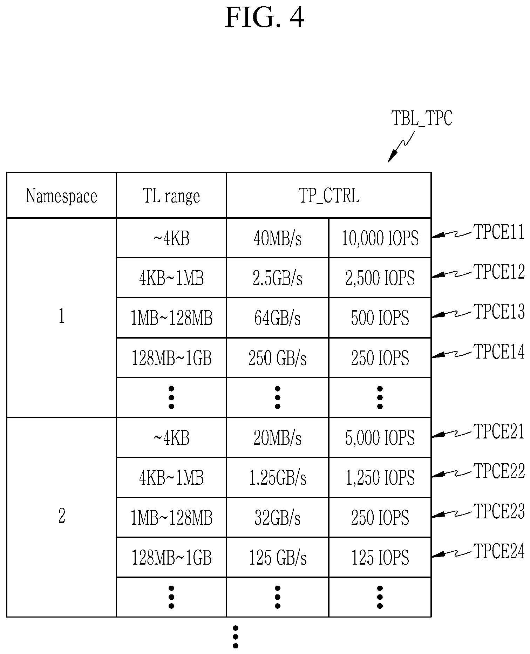

FIG. 4 is a drawing illustrating the trim performance control table of FIG. 2 in more detail. Referring to FIGS. 1 to 4, the trim performance control table TBL_TPC may include a plurality of trim performance control entries TPCE. For example, the trim performance control table TBL_TPC may include a first plurality of trim performance control entries TPCE11 to TPCE14 and a second plurality of trim performance control entries TPCE21 to TPCE24. However, the scope of the present disclosure is not limited to the number of trim performance control entries TPCE included in the trim performance control table TBL_TPC.

Each of the plurality of trim performance control entries TPCEs may correspond to a different combination of one or more trim information records. For example, each of the plurality of trim performance control entries TPCEs may correspond to a different combination of namespace NS and trim load TL range. For a more detailed example, each of the first plurality of trim performance control entries TPCE11 to TPCE14 may correspond to a first namespace NS1 and may correspond to different trim load TL ranges. Each of the second plurality of trim performance control entries TPCE21 to TPCE24 may correspond to a second namespace NS2 and may correspond to different trim load TL ranges.

For a more detailed example, the trim performance control entries TPCE11, TPCE21 may correspond to a trim load TL range of 4 KB or less, the trim performance control entries TPCE12, TPCE22 may correspond to a trim load TL range of 4 KB to 1 MB, the trim performance control entries TPCE13, TPCE23 may correspond to a trim load TL range of 1 MB to 128 MB, and the trim performance control entries TPCE14, TPCE24 may correspond to a trim load TL range of 128 MB to 1 GB. However, the scope of the present disclosure is not limited to a specific value of trim load TL range corresponding to each trim performance control entry TPCE.

Each of the plurality of trim performance control entries TPCE may include a different trim performance control value TP_CTRL. For example, the first plurality of trim performance control entries TPCE11 to TPCE14 may respectively include trim performance control values TP_CTRL "40 MB/s and 10000 IOPS (input/output per second)", "2.5 GB/s and 2500 IOPS", "64 GB/s and 500 IOPS", and "250 GB/s and 250 IOPS". The second plurality of trim performance control entries TPCE21 to TPCE24 may respectively include trim performance control values TP_CTRL "20MB/s and 5000IOPS", "1.25GB/s and 1250IOPS", "32GB/s and 250IOPS", and "125GB/s and 125IOPS". For a more concise explanation, FIG. 4 shows the trim performance control value TP_CTRL included in each of the plurality of trim performance control entries TPCE in units of 'processing capacity per second' and 'number of commands processed per second', but the scope of the present disclosure is not limited thereto. For example, each of the plurality of trim performance control entries TPCE may represent the trim performance control value TP_CTRL in various formats, such as 'logical block deallocation per second', 'processing capacity per second' and 'command processing per second', the Trim performance control value TP_CTRL.

In an embodiment, the trim performance control value TP_CTRL of each of a plurality of trim performance control entries TPCEs corresponding to the same namespace NS may be different from each other. For example, the trim performance control value TP_CTRL of each of the plurality of trim performance control entries TPCEs corresponding to the same namespace NS and different trim load TL ranges may be different. In this case, different trim performance control values TP_CTRL may be applied depending on how much the resources of the storage controller 110 are occupied (i.e., depending on the size of the trim load TL).

In an embodiment, the trim performance control value TP_CTRL of each of a plurality of trim performance control entries TPCEs corresponding to the same trim load TL range may be different from each other. For example, the trim performance control values TP_CTRL of the plurality of trim performance control entries TPCEs corresponding to the same trim load TL range and corresponding to different namespaces NS may be different from each other. In this case, different trim performance control values TP_CTRL may be applied depending on the QoS required by each tenant.

In an embodiment, a plurality of namespaces NS may be allocated to a single tenant. In this case, the trim performance control value TP_CTRL of each of the plurality of trim performance control entries TPCEs corresponding to the same tenant may be the same. However, the scope of the present disclosure is not limited thereto.

The trim performance control circuit 111b may control the trim performance of the storage controller 110 based on the trim performance control table TBL_TPC. For example, the trim performance control circuit 111b may identify a trim performance control entry TPCE corresponding to one or more trim information records for a trim command CMD_T. The trim performance control circuit 111b may control the trim performance TP for the trim command CMD _T based on the trim performance control value TP_CTRL included in the identified trim performance control entry TPCE.

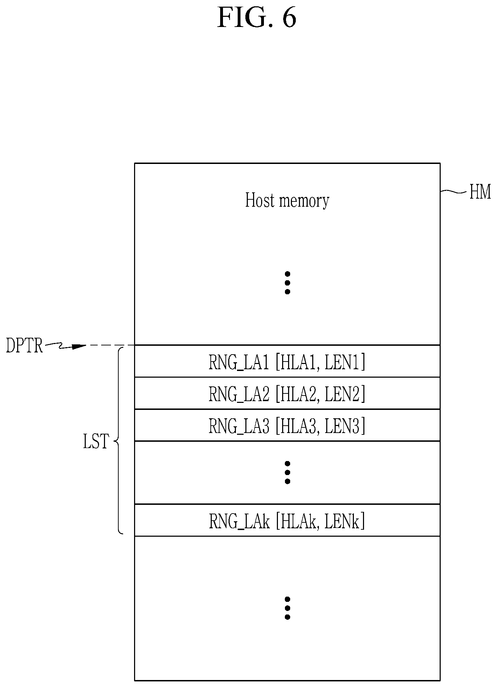

For a more detailed example, the processor 113 may identify a trim load TL and a namespace NS corresponding to the trim command CMD_T by parsing a trim command CMD_T. The trim performance control circuit 111b may control the trim performance TP for the trim command CMD_T based on the trim performance control value TP_CTRL corresponding to the identified trim load TL and namespace NS. For example, when a trim command CMD_T corresponding to the first namespace NS1 and a trim load of 64 MB is provided to the storage controller 110, the trim performance control circuit 111b may control the trim performance TP for the trim command CMD_T to "64 GB/s and 500 IOPS" or less. A specific method in which the processor 113 identifies the trim load TL and namespace NS corresponding to the trim command CMD_T is described with reference to FIGS. 5 and 6 below.

As described above, the trim performance control circuit 111b may control the trim performance TP differently for each trim command CMD_T based on the trim performance control table TBL_TPC. In this case, the phenomenon of excessive use of resources of the storage controller 110 to process a specific trim command CMD_T may be prevented.

FIG. 5 is a diagram illustrating the packet structure of the trim command of FIG. 1. For the sake of brevity, the trim command CMD_T is assumed to have a dataset management command format below.

Referring to FIGS. 1 to 5, the trim command CMD_T may include the plurality of DWORDs DW. For example, the trim command CMD_T may contain 16 DWORDs DW. However, the scope of the present disclosure is not limited to the number of DWORDs DW included in the trim command CMD_T.

The 0-th DWORD DW0 of the trim command CMD_T may include a PSDT (PRP or SGL for Data Transfer) field and an OPC (opcode) field. The PSDT field may indicate whether data related to the trim command CMD_T is transmitted in PRP (Physical Region Page) format or SGL (Scatter-Gather List) format. OPC fields may contain operation codes (i.e., opcodes) that represent dataset management commands.

The first DWORD DW1 of the trim command CMD_T may include an NSID field. The NSID field may indicate a namespace NS corresponding to the trim command CMD_T.

The sixth to ninth DWORDs DW6 to DW9 of the trim command CMD_T may include a DPTR (data pointer) field. The DPTR field may be used to specify data used in executing a trim command CMD_T. For example, the DPTR field may indicate an address (or the address of a pointer pointing the address), within host memory HM, of a logical address range list LST including logical address ranges whose mapping to a physical address is to be deallocated by the trim command CMD_T.

The tenth DWORD DW10 of the trim command CMD_T may include a NR (number of ranges) field. For example, the NR field may indicate the number of logical address ranges to be deallocated for mapping to physical addresses.

The eleventh DWORD DW11 of the trim command CMD_T may represent the AD (attribute-deallocate) field. For example, the AD field may indicate that the packet structure illustrated in FIG. 3 is a packet requesting deallocation. That is, the processor 113 may identify that the packet structure of FIG. 3 represents a dataset management command based on the OPC field; and may identify that the packet structure of FIG. 3 represents a trim command CMD_T, which is one type of dataset management command, based on the AD field.

That is, the packet structure of the trim command CMD_T may not indicate a total size of the logical address ranges whose mappings with physical addresses will be deallocated in response to the trim command CMD_T. In other words, the packet structure of the trim command CMD_T may not indicate the size of the load of the trim operation (i.e., trim load) to be performed by the processor 113 in response to the trim command CMD_T. Therefore, even if one tenant repeatedly issues trim commands CMD_T that causes an excessively large trim load, it may be difficult for the supervisor SV to block the transmission of the trim command CMD_T. However, according to an embodiment of the present disclosure, trim performance may be controlled based on a trim performance control table TBL_TPC within the storage controller 110. In this case, even if the supervisor SV does not block transmission of trim commands CMD_T repeatedly issued by a specific tenant, a phenomenon in which a single tenant monopolizes resources within the storage controller 110 through the trim command CMD_T may be prevented.

For a more concise explanation, FIG. 3 shows representative examples of some DWORDs DWs included in the packet structure of the trim command CMD_T, but the scope of the present disclosure is not limited thereto. For example, some of the fields shown in FIG. 3 may be included in another DWORD or may not be included in the packet structure of the trim command CMD_T.

FIG. 6 is a diagram illustrating a portion of the host memory of FIG. 1. Referring to FIGS. 1 to 6, the DPTR field of the trim command CMD_T may indicate a logical address range list LST stored in the host memory HM. For example, the DPTR field of a trim command CMD_T may indicate an address of a head address of the logical address range list LST.

The logical address range list LST may represent a plurality of logical address ranges RNG_LA. For example, a logical address range list LST may represent the first to k-th logical address ranges RNG_LA1 to RNG_LAk. In this case, 'k' may be a value indicated by the NR field of the trim command CMD_T.

More specifically, the logical address range list LST may indicate each of the first to k-th logical address ranges RNG_LA1 to RNG_LAk based on a head logical address HLA and a logical address range length LEN. For example, the logical address range list LST may include first to k-th head logical addresses HLA1 to HLAk and first to k-th logical address range lengths LEN1 to LENk corresponding to first to k-th logical address ranges RNG_LA1 to RNG_LAk, respectively.

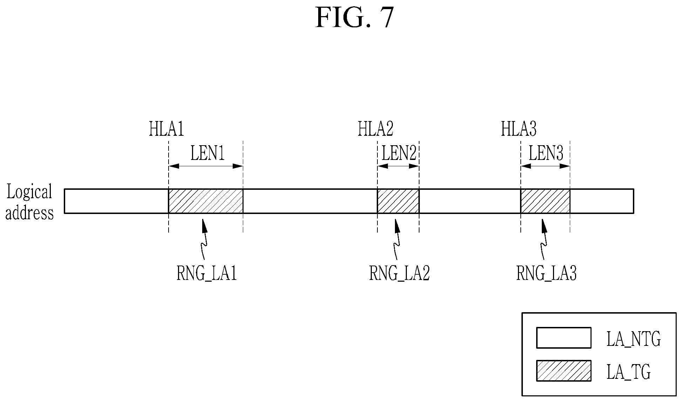

FIG. 7 is a diagram illustrating the logical address ranges of FIG. 6. Referring to FIGS. 1 to 7, the processor 113 may identify logical address ranges RNG_LA where to perform trim operation based on the logical address range list LST provided from the host memory HM. The processor 113 may identify logical addresses included in the identified logical address ranges RNG_LA as trim target logical addresses LA_TG.

For a more detailed example, when 'k' is 3, the processor 113 may identify logical addresses included in the first to third logical address ranges RNG_LA1 to RNG_LA3 as the trim target logical addresses LA_TG.

In an embodiment, the processor 113 may identify logical addresses out of the identified logical address ranges RNG_LA as trim non-target logical addresses LA_NTG.

The processor 113 may deallocate each of the identified trim target logical addresses LA_TG from physical address. For example, the processor 113 may deallocate a logical block address corresponding to a trim target logical address LA _TG from physical page of a nonvolatile memory device 120.

A trim load TL corresponding to one trim command CMD_T may be determined based on a product of a number of trim target logical addresses LA_TG for the trim command CMD_T and a size of one logical block.

The number of trim target logical addresses LA_TG for the trim command CMD_T may correspond to a total number of logical addresses included in the first to k-th logical address ranges RNG_LA1 to RNG_LAk. A number of logical addresses included in each of the first to k-th logical address ranges RNG_LA1 to RNG_LAk may be determined according to the corresponding logical address range length LEN. That is, the number of trim target logical addresses LA_TG corresponding to one trim command CMD_T may be determined in proportion to a sum of the lengths of the first to k-th logical address ranges LEN1 to LENk included in the logical address range list LST.

In this way, the processor 113 may be able to identify a trim load TL for the trim command CMD_T after accessing the logical address range list LST stored in the host memory HM. In this case, similarly to what was described above with reference to FIG. 4, the trim performance manager 111 may control the trim performance for the trim command CMD_T based on the trim load TL.

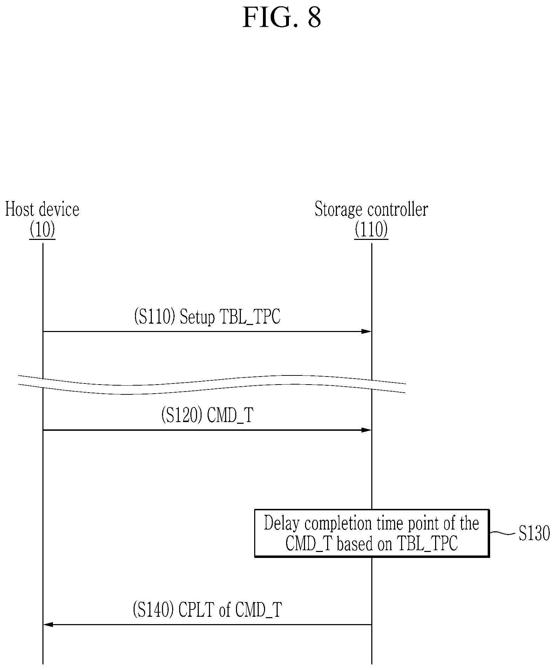

FIG. 8 is a diagram illustrating the operation of the storage system of FIG. 1 according to an embodiment. Referring to FIGS. 1 to 8, at operation S110, the host device 10 may setup a trim performance control table TBL_TPC within the storage controller 110. For example, the host device 10 may update the trim performance control table TBL_TPC by issuing a set feature command. Thereafter, the storage controller 110 may operate in a trim performance control mode for the received trim command CMD_T.

At operation S120, the host device 10 may transmit a trim command CMD_T to the storage controller 110. For example, the host device 10 may transmit a trim command CMD_T issued from one tenant to the storage controller 110.

At operation S130, the storage controller 110 may delay the completion time point of the trim command CMD_T based on the trim performance control table TBL_TPC.

In an embodiment, the completion time point may refer to the time point at which a completion CPLT for the trim command CMD_T is provided to the host device 10.

In an embodiment, the storage controller 110 may delay the completion time point only by delaying the transmission of the completion CPLT after completing the processing for the trim command CMD_T (e.g., unmapping between logical and physical addresses).

In an embodiment, the storage controller 110 may delay the completion time by performing processing (e.g., unmapping between logical and physical addresses) for a trim command CMD_T slowly, or delay the starting time point.

At operation S140, the storage controller 110 may provide the completion CPLT for the trim command CMD_T to the host device 10. For example, the storage controller 110 may provide the completion CPLT to the host device 10 indicating whether processing of the trim command CMD_T was successful.

That is, according to an embodiment of the present disclosure, the time point at which the completion CPLT for the trim command CMD_T (in particular, a trim command issued from a tenant requesting low QoS) is returned to the host device 10 may be delayed based on the trim performance control table TBL_TPC. In this case, a time point at which the trim command CMD_T is additionally provided to the storage controller 110 may be delayed as the time point at which the tenant who issued the trim command CMD_T further issues another trim command CMD_T is delayed; and the time point at which the another trim command CMD_T is provided to the storage controller 110 may be delayed under the control of the supervisor SV. Accordingly, the phenomenon of over-occupation of resources of the storage controller 110 by trim commands CMD_T issued from specific tenants (particularly, tenants requiring low QoS) may be minimized. The specific manner in which providing of an additional trim command CMD_T to the storage controller 110 is delayed due to a delay of providing the completion CPLT to the host device 10 will be described later with reference to FIGS. 16 to 18.

FIG. 9 is a diagram illustrating the operation of a storage controller based on a trim command according to an embodiment. Referring to FIGS. 1 to 9, the trim performance control circuit 111b of FIG. 2 may be implemented with the following trim performance control circuit 111b_1.

The trim performance control circuit 111b_1 may be connected between the processor 113 and the completion buffer BF_CPLT. For example, the trim performance control circuit 111b_1 may be connected between the first core CR1 and the completion buffer BF_CPLT.

The first core CR1 may receive a first trim command CMD_T1 from the command queue Q_CMD.

The first core CR1 may generate one or more trim information records by parsing the first trim command CMD_T1. For example, the first core CR1 may generate a first trim load TL_T1 (hereinafter, it may also be referred to as a trim load value) and a first namespace identifier NSID_T1 by parsing the first trim command CMD_T1.

The first core CR1 may provide one or more trim information records to the trim performance control circuit 111b_1. For example, the first core CR1 may provide a first trim load TL_T1 and a first namespace identifier NSID_T1 to the trim performance control circuit 111b_1.

The first core CR1 may process the first trim command CMD_T1. For example, the first core CR1 may perform the operation indicated by the first trim command CMD_T1. For a more detailed example, a logical address range list LST corresponding to the first trim command CMD_T1 may include the first to third logical address ranges RNG_LA1 to RNG_LA3 described with reference to FIGS. 5 to 7. In this case, the first core CR1 may invalidate the mapping for physical address of each of logical blocks included in the first to third logical address ranges RNG_LA1 to RNG_LA3.

After processing for the first trim command CMD_T1 is completed, the first core CR1 may generate a first completion CPLT_T1 for the first trim command CMD_T1. The first core CR1 may provide the first completion CPLT_T1 to the trim performance control circuit 111b_1.

That is, instead of providing the first completion CPLT_T1 directly to the completion buffer BF_CPLT, the first core CR1 may provide the first completion CPLT_T1 to the completion buffer BF_CPLT through the trim performance control circuit 111b_1.

The trim performance control circuit 111b_1 may access the trim performance control table TBL_TPC. For example, the trim performance control circuit 111b_1 may identify one trim performance control entry TPCE based on one or more trim information records for the first trim command CMD_T1.

For a more detailed example, the trim performance control circuit 111b_1 may receive a trim performance control table TBL_TPC. The trim performance control circuit 111b_1 may identify one of a plurality of trim performance control entries TPCEs included in the trim performance control table TBL_TPC based on the first trim load TL_T1 and the first namespace identifier NSID_T1.

The trim performance control circuit 111b_1 may identify a trim performance control value TP_CTRL included in an identified trim performance control entry TPCE. The trim performance control circuit 111b_1 may delay (e.g., withhold or hold) the transmission of the first completion CPLT_T1 to the completion buffer BF_CPLT based on the identified trim performance control value TP_CTRL.

For a more detailed example, when only one completion CPLT (e.g., the first completion CPLT_T1) is provided to the trim performance control circuit 111b_1, the first trim load TL_T1 is "64MB", and the first namespace identifier NSID_T1 indicates the first namespace NS1, the trim performance control circuit 111b_1 may identify the trim performance control entry TPCE13. In this case, the trim performance control circuit 111b_1 may delay (e.g., withhold or hold) the transmission of the first completion CPLT_T1 to the completion buffer BF_CPLT so that the first trim command CMD_T1 is processed below the trim performance control value TP_CTRL "64 GB/s and 500 IOPS" included in the trim performance control entry TPCE13.

That is, the trim performance control circuit 111b_1 may not immediately transmit the first completion CPLT_T1 to the completion buffer BF_CPLT, and may transmit the first completion CPLT_T1 to the completion buffer BF_CPLT after a delay period determined based on the trim performance control value TP_CTRL.

The trim performance control circuit 111b_1 may determine a beginning point of the delay period in various ways. For example, the trim performance control circuit 111b_1 may determine the beginning point of the delay period as a time point at which the first trim command CMD_T1 is provided to the command queue Q_CMD; as a time point time point at which the first trim command CMD_T1 is provided from the command queue Q_CMD to the first core CR1; as a time point time point at which the first completion CPLT_T1 is generated from the first core CR1; or as a time point time point at which the trim performance control circuit 111b_1 receives the first completion CPLT_T1. That is, the scope of the present disclosure is not limited to a specific method how the beginning point of the delay period is determined.

In an embodiment, the beginning point of the delay period may be determined as a time point when the first trim command CMD_T1 is provided to the command queue Q_CMD. In this case, the command queue Q_CMD may provide the first core CR1 with a timestamp for the time point when the first trim command CMD_T1 stored. The trim performance control circuit 111b_1 may identify the beginning point of the delay period based on the timestamp.

In an embodiment, the beginning point of the delay period may be determined as the time point when the first trim command CMD_T1 is provided to the first core CR1 from the command queue Q_CMD. In this case, the first core CR1 may store a timestamp for a time point when the first trim command CMD_T1 received. In this case, the trim performance control circuit 111b_1 may identify the beginning point of the delay period based on the time stamp.

In an embodiment, the beginning point of the delay period may be determined as the time point when the first completion CPLT_T1 is generated from the first core CR1. In this case, the first core CR1 may store a timestamp for when the first completion CPLT_T1 generated. The trim performance control circuit 111b_1 may identify the beginning point of the delay period based on the time stamp from the first core CR1.

In an embodiment, the beginning point of the delay period may be determined as the time point at which the trim performance control circuit 111b_1 receives the first completion CPLT_T1. In this case, the trim performance control circuit 111b_1 may generate a timestamp indicating when the first completion CPLT_T1 received. The trim performance control circuit 111b_1 may determine the time point indicated by the timestamp as the beginning point of the delay period.

The length of the delay period may be referred to as the delay time length. The delay time length may be determined based on the identified trim performance control value TP_CTRL.

In an embodiment, the trim performance control circuit 111b_1 may be in a state withholding only one completion CPLT. For example, the trim performance control circuit 111b_1 may be in a state where only the transmission of the first completion CPLT_T1 is suspended. In this case, the trim performance control circuit 111b_1 may determine the delay time length based on one trim performance control value TP_CTRL identified based on the first completion CPLT_T1. For a more detailed example, when the trim performance control value TP_CTRL corresponding to the first completion CPLT_T1 is "500IOPS," the trim performance control circuit 111b _1 may determine the delay time length as 0.002 seconds (e.g., 1/500 seconds). In this case, completion CPLT for trim commands CMD_T may be sent to the completion buffer CPLT at a rate of no more than 500 per second (i.e., no more than one per 0.002 second).

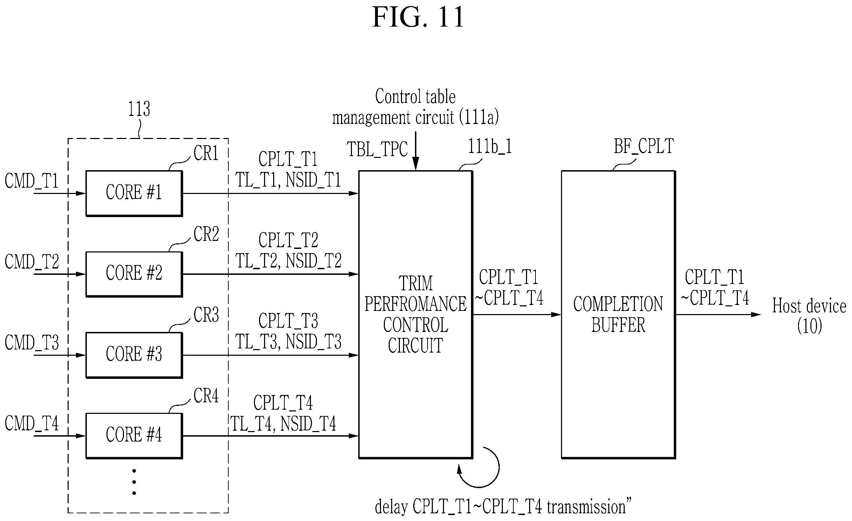

In an embodiment, the trim performance control circuit 111b_1 may be in a state withholding a plurality of completions CPLT. The delay time length in case of the trim performance control circuit 111b_1 holds the plurality of completions CPLT is described in more detail with reference to FIG. 11 below.

The completion buffer BF_CPLT may receive completions CPLT from one or more cores CR. For example, the completion buffer BF_CPLT may receive the first completion CPLT_T1 from the first core CR1.

In this way, the completion buffer BF_CPLT may store one or more completions CPLT. The completion buffer BF_CPLT may sequentially provide one or more completions CPLT to the host device 10. For example, the completion buffer BF_CPLT may provide the first completion CPLT_T1 to the host device 10.

In an embodiment, the plurality of cores CR may share the completion buffer BF_CPLT. For example, the completion buffer BF_CPLT may store completions CPLT provided from each of the plurality of cores CR.

That is, according to an embodiment of the present disclosure, the time point at which the first completion CPLT_T1 is provided to the host device 10 (e.g., a completion time for the first command CMT_T1) may be delayed. In this case, a time point at which a subsequent command for the first command CMT_T1 (e.g., a command corresponding to the same namespace as the first command CMT_T1, or another trim command CMD_T, etc.) is provided from the host device 10 may be delayed. Therefore, according to the embodiment of the present disclosure, the phenomenon of over-occupancy of resources of the storage controller 110 by the trim command CMD_T may be minimized.

Meanwhile, the first core CR1 may process another command provided from the command queue Q_CMD after generating the first completion CPLT_T1 (e.g., after processing for the first trim command CMD_T1 is completed). For example, while transmission of the first completion CPLT_T1 is withheld by the trim performance control circuit 111b_1, the first core CR1 may parse and process another command CMD (e.g., a read command CMD_R or a write command CMD_W). In this case, the first core CR1 may operate continuously, so resource utilization of the storage controller 110 may be maximized. That is, according to an embodiment of the present disclosure, the time point at which the host device 10 receives the first completion CPLT_T1 may be delayed while the resource utilization of the storage controller 110 is maintained in a maximized state.

In an embodiment, a path how the first core CR1 provides the first completion CPLT_T1 to the completion buffer BF_CPLT may be referred to as a "delay path'. For example, a processor 113, a trim performance control circuit 111b_1, and a completion buffer BF_CPLT may be included on (e.g., located in) the delay path. However, the scope of the present disclosure is not limited to these terms.

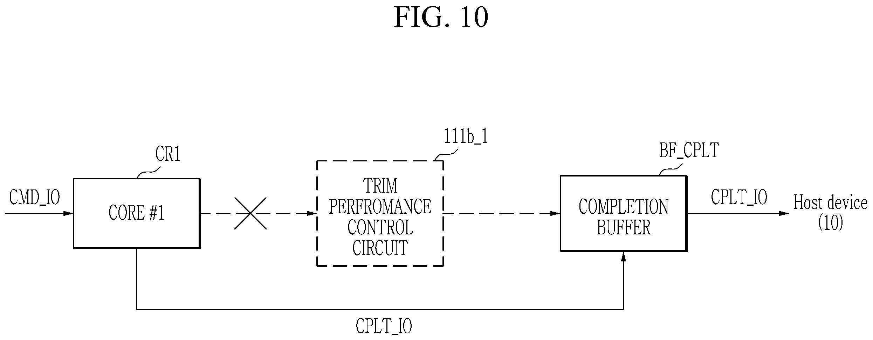

FIG. 10 is a diagram illustrating the operation of a storage controller based on input/output commands according to an embodiment. Referring to FIGS. 1 to 10, the first core CR1 may receive an input/output command CMD_IO from a command queue Q_CMD. The input/output command CMD_IO may be a read command CMD_R or a write command CMD_W.

The first core CR1 may process input/output commands CMD_IO. For example, the first core CR1 may identify a physical address of a nonvolatile memory device 120 corresponding to a logical address indicated by an input/output command CMD_IO, and store data DATA in the identified physical address or read data DATA from the identified physical address.

After processing for the input/output command CMD_IO is completed, the first core CR1 may generate an input/output completion CPLT_IO for the input/output command CMD_IO.

The first core CR1 may provide input/output completion CPLT_IO to the completion buffer BF_CPLT. That is, instead of providing the input/output completion CPLT_IO to the trim performance control circuit 111b_1, the first core CR1 may directly provide the input/output completion CPLT_IO to the completion buffer BF_CPLT. The completion buffer BF_CPLTmay provide input/output completion CPLT_IO to the host device 10 in a similar manner as described above.

That is, according to the embodiment of the present disclosure, since the input/output completion CPLT_IO is not withheld for transmission by the trim performance control circuit 111b_1, it may be provided to the completion buffer BF_CPLT faster than the first completion CPLT_T1 and may be transmitted to the host device 10 faster.

In an embodiment, a path how the first core CR1 provides an I/O completion CPLT_IO to the completion buffer BF_CPLT may be referred to as a 'normal path'. That is, a processor 113 and a completion buffer BF_CPLT may be included in (e.g., located on) the normal path, and a trim performance control circuit 111b_1 may not be include in (e.g., located on) the normal path. However, the scope of the present disclosure is not limited to these terms.

FIG. 11 is a diagram illustrating the operation of a storage controller based on a trim command according to an embodiment. Hereinafter, the operation of a storage controller 110 that controls trim performance TP for a plurality of trim commands CMD_T will be described with reference to FIGS. 1 to 11.

Each of the plurality of cores CR may receive a different trim command CMD_T from the command queue Q_CMD. For a more concise explanation, an embodiment in which the first to fourth cores CR1 to CR4 respectively receive the first to fourth trim commands CMD_T1 to CMD_T4 will be described below as a representative example. However, the scope of the present disclosure is not limited to the number of cores CR that process the trim command CMD_T.

Each of the first to fourth cores CR1 to CR4 may generate one or more trim information records by parsing a received trim command CMD_T. For example, the first to fourth cores CR1 to CR4 may generate the first to fourth trim loads TL_T1 to TL_T4 (e.g., trim load values) and the first to fourth namespace identifiers NSID_T1 to NSID_T4, respectively.

Each of the first to fourth cores CR1 to CR4 may generate a completion CPLT after processing a received trim command CMD_T. For example, the first to fourth cores CR1 to CR4 may generate the first to fourth completions CPLT_T1 to CPLT_T4, respectively. The first to fourth cores CR1 to CR4 may provide first to fourth completions CPLT_T1 to CPLT_T4 to the trim performance control circuit 1 11b_1, respectively. That is, instead of providing the completion CPLT directly to the completion buffer BF_CPLT, each of the first to fourth cores CR1 to CR4 may provide the completion CPLT to the completion buffer BF_CPLT through the trim performance control circuit 111b_1. Since the operation of each of the first to fourth cores CR1 to CR4 is similar to that described above with reference to FIG. 9, a detailed description is omitted.

The trim performance control circuit 111b_1 may receive the first to fourth completions CPLT_T1 to CPLT_T4. The trim performance control circuit 111b_1 may receive the first to fourth completions CPLT_T1 to CPLT_T4 with short time intervals. In this case, at a certain time point, the trim performance control circuit 111b_1 may be in a state withholding all of the first to fourth completions CPLT_T1 to CPLT_T4.

The trim performance control circuit 111b_1 may access the trim performance control table TBL_TPC. The trim performance control circuit 111b_1 may withhold transmission of the first to fourth completions CPLT_T1 to CPLT_T4 to the completion buffer BF_CPLT based on one or more trim information records provided from each of the first to fourth cores CR1 to CR4 and the trim performance control table TBL_TPC. For example, the trim performance control circuit 111b_1 may withhold transmission of the first to fourth completions CPLT_T1 to CPLT_T4 to the completion buffer BF_CPLT based on the first to fourth trim loads TL_T1 to TL_T4 and the first to fourth namespace identifiers NSID_T1 to NSID_T4.

The trim performance control circuit 111b_1 may withhold transmission of the plurality of completions CPLTs corresponding to one tenant (e.g., one namespace NS). In this case, the trim performance control circuit 111b_1 may determine delay time length to be applied to each of the plurality of completions CPLT by considering the plurality of trim loads TL corresponding to the plurality of completions CPLT. That is, the trim performance control circuit 111b_1 may determine delay time length to be applied to each of a plurality of completions CPLTs corresponding to the same tenant to be correlated with each other. In this case, the phenomenon of over-occupancy of resources of the storage controller 110 due to the plurality of trim commands CMD_T corresponding to one tenant may be prevented. For the sake of brevity, below, it is assumed that all of the first to fourth namespace identifiers NSID_T1 to NSID_T4 correspond to one namespace NS. However, the scope of the present disclosure is not limited thereto.

The trim performance control circuit 111b_1 may determine the delay time length to be applied to each of the first to fourth completions CPLT_T1 to CPLT_T4 by considering all of the first to fourth trim loads TL_T1 to TL_T4. For example, the trim performance control circuit 111b_1 may identify a plurality of trim performance control entries TPCEs corresponding to the first to fourth completions CPLT_T1 to CPLT_T4, similarly to what was described above with reference to FIG. 9. The trim performance control circuit 111b_1 may determine a "representative trim performance control value" based on a plurality of identified trim performance control entries TPCEs. The trim performance control circuit 111b_1 may determine the delay time length to be applied to each of the first to fourth completions CPLT_T1 to CPLT_T4 based on the "representative trim performance control value."

That is, below, an embodiment is representatively described in which the trim performance control circuit 111b_1 determines the delay time length to be applied to each of a plurality of completions CPLT based on a "representative trim performance control value." However, the scope of the present disclosure is not limited thereto, and the trim performance control circuit 111b_1 may determine the delay time length to be applied to some completions CPLT without considering the trim performance control value TP_CTRL corresponding to other completions CPLT. For example, if a trim performance control value TP_CTRL corresponding to a specific completion CPLT is less than a predetermined threshold value, the trim performance control circuit 111b_1 may not delay transmission of the completion CPLT to the completion buffer BF_CPLT.

In an embodiment, the trim performance control entries TPCE corresponding to each of the first to fourth completions CPLT_T1 to CPLT_T4 may be identical to each other. For example, all of the first to fourth namespace identifiers NSID_T1 to NSID_T4 may represent the same namespace NS, and each of the first to fourth trim loads TL_T1 to TL_T4 may be included in the same trim load range. In this case, the trim performance control circuit 111b_1 may determine the trim performance control value TP_CTRL included in the corresponding trim performance control entry TPCE as a "representative trim performance control value." The trim performance control circuit 111b_1 may determine a delay time length to be applied to each of the first to fourth completions CPLT_T1 to CPLT_T4 so that the sum of the trim performances applied to the first to fourth trim commands CMD_T1 to CMD_T4 is lower than a "representative trim performance control value." For a more detailed example, each of the first to fourth namespace identifiers NSID_T1 to NSID_T4 may represent a first namespace NS1, and each of the first to fourth trim loads TL_T1 to TL_T4 may be within a trim load TL range of "1 MB to 128 MB". In this case, the trim performance control circuit 111b_1 may identify the trim performance control entry TPCE13 as a trim performance control entry TPCE corresponding to each of the first to fourth completions CPLT_T1 to CPLT_T4. The trim performance control circuit 111b_1 may determine the trim performance control value TP_CTRL "64 GB/s and 500 IOPS" included in the trim performance control entry TPCE13 as a "representative trim performance control value." The trim performance control circuit 111b_1 may determine a delay time length to be applied to each of the first to fourth completions CPLT_T1 to CPLT_T4 such that the sum of the trim performances applied to the first to fourth trim commands CMD_T1 to CMD_T4 becomes less than or equal to a "representative trim performance control value (e.g., 64 GB/s and 500 IOPS)."

In an embodiment, the trim performance control entries TPCEs corresponding to each of the first to fourth completions CPLT_T1 to CPLT_T4 may be different. For example, all of the first to fourth namespace identifiers NSID_T1 to NSID_T4 may represent the same namespace NS, and each of the first to fourth trim loads TL_T1 to TL_T4 may be included in a different trim load range. In this case, the trim performance control circuit 111b_1 may determine a "representative trim performance control value" based on trim performance control values TP_CTRL included in trim performance control entries TPCE corresponding to each of the first to fourth trim commands CMD_T1 to CMD_T4. For example, the trim performance control circuit 111b_1 may determine the "representative trim performance control value" in various ways, such as the lowest value, highest value, median value, average value, weighted average value, etc., of the trim performance control values TP_CTRL included in the trim performance control entries TPCE corresponding to each of the first to fourth trim commands CMD_T1 to CMD_T4. The trim performance control circuit 111b_1 may also determine a delay time length to be applied to each of the first to fourth completions CPLT_T1 to CPLT_T4 so that the sum of the trim performances applied to the first to fourth trim commands CMD_T1 to CMD_T4 is lower than a "representative trim performance control value." However, the scope of the present disclosure is not limited to a specific method of determining a "representative trim performance control value" and a specific method of using the trim performance control circuit 111b_1 the "representative trim performance control value." For example, the trim performance control circuit 111b_1 may determine delay time length to be applied to each of the first to fourth completions CPLT_T1 to CPLT_T4 based on ratio among trim performance control values TP_CTRL corresponding to the first to fourth trim commands CMD_T1 to CMD_T4. More specifically, when the ratio among the trim performance control values TP_CTRL corresponding to the first to fourth trim commands CMD_T1 to CMD_T4 is 1:2:3:4, the trim performance control circuit 111b_1 may determine the delay time length to be applied to each of the first to fourth completions CPLT_T1 to CPLT_T4 based on the values obtained by dividing the "representative trim performance control value" into 1:2:3:4.

In an embodiment, the trim performance control circuit 111b_1 may receive the plurality of completions CPLTs corresponding to different tenants. In this case, the trim performance control circuit 111b_1 may independently determine the delay time length to be applied to each of the completions CPLT corresponding to different tenants. For example, the trim performance control circuit 111b_1 may determine the delay time length to be applied to the completion CPLT corresponding to the first namespace NS regardless of the delay time length to be applied to the completion CPLT corresponding to the second namespace NS2. In this case, even if the trim performance control circuit 111b_1 reduces the trim performance for a specific tenant (or namespace), the trim performance for other tenants (or namespaces) may be maintained. However, the scope of the present disclosure is not limited thereto.

The trim performance control circuit 111b_1 may sequentially provide the first to fourth completions CPLT_T1 to CPLT_T4 to the completion buffer BF_CPLT. For example, the trim performance control circuit 111b_1 may provide the first completion CPLT_T1 to the completion buffer BF_CPLT after a delay time length corresponding to the first completion CPLT_T1 has elapsed; and may provide the second completion CPLT_T2 to the completion buffer BF_CPLT after a delay time length corresponding to the second completion CPLT_T2 has elapsed.

The completion buffer BF_CPLT may sequentially provide the completion CPLT provided from the trim performance control circuit 111b_1 to the host device 10.

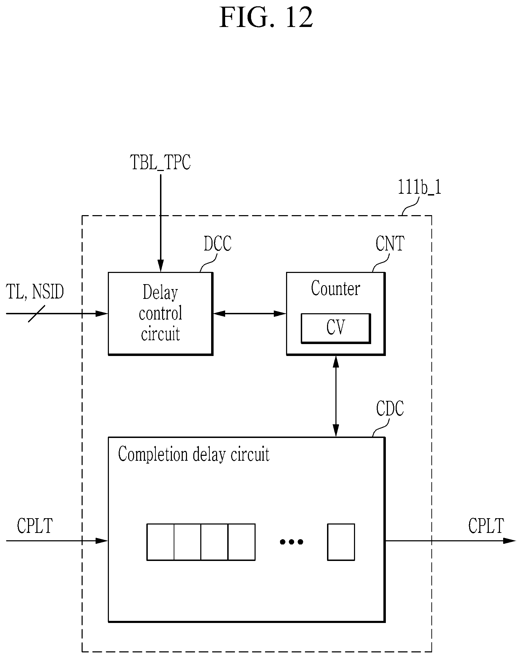

FIG. 12 is a block diagram illustrating the configuration of the trim performance control circuit of FIGs. 9 and 11. Referring to FIGS. 1 to 12, the trim performance control circuit 111b_1 may include a delay control circuit DCC, a counter CNT, and a completion delay circuit CDC. In the following, for a more concise explanation, an exemplary embodiment in which the trim performance control circuit 111b_1 delays transmission of the completion CPLT in a token-based throttling manner will be described. However, the scope of the present disclosure is not limited to the type of specific algorithm that the trim performance control circuit 111b_1 uses to delay transmission of the completion CPLT.

The delay control circuit DCC may receive one or more trim information records corresponding to each trim command CMD _T. For example, the delay control circuit DCC may receive a trim load TL (e.g., a trim load value) and a namespace identifier NSID corresponding to each trim command CMD _T.

The delay control circuit DCC may identify trim performance control entries TPCE (or trim performance control values TP_CTRL) corresponding to each trim command CMD_T based on the trim load TL and namespace identifier NSID corresponding to each trim command CMD_T. The delay control circuit DCC may determine a "representative trim performance control value" based on the trim performance control entries TPCE corresponding to each trim command CMD_T.

The counter CNT may manage a count value CV. The count value CV may be managed as an integer greater than or equal to '0' with an upper bound value (e.g. '1' or any natural number). However, the scope of the present disclosure is not limited thereto.

In an embodiment, the count value CV may correspond to a 'token count' of a token-based throttling algorithm. However, the scope of the present disclosure is not limited thereto.

The delay control circuit DCC may increase the count value CV at regular time intervals according to the "representative trim performance control value". For example, if the "representative trim performance control value" is "500 IOPS", the delay control circuit DCC may increase the count value CV by '1' in every 0.002 seconds (e.g., 1/500 seconds).

The completion delay circuit CDC may receive the completion CPLT (e.g., a completion CPLT_T for a trim command CMD_T) from each core CR. The completion delay circuit CDC may store one or more completions CPLTs provided from each core CR.

The completion delay circuit CDC may access to the count value CV. When the count value CV is greater than '0', the completion delay circuit CDC may decrease the count value CV by '1' and provide one completion CPLT to the completion buffer BF_CPLT. For example, when the count value CV is '1', the completion delay circuit CDC may decrease the count value CV to '0' and provide one completion CPLT to the completion buffer BF_CPLT. In this case, completions CPLT may be provided to the completion buffer BF_CPLT at intervals that are equal to or longer than the time interval at which the count value CV increases (i.e., the time interval corresponding to the "representative trim performance control value"). Accordingly, according to an embodiment of the present disclosure, even if the plurality of trim commands CMD_T are issued from one tenant, the timing at which the completion CPLT for each of the plurality of trim commands CMD_T is transmitted to the host device 10 may be appropriately controlled. In this case, the delay time length applied to each of the plurality of trim commands CMD_T may be different.

In an embodiment, the trim performance control circuit 111b_1 may independently determine the delay time length to be applied to each of the completions CPLT corresponding to different tenants. In this case, the counter CNT may manage different count value CV for each tenant that issued the trim command CMD_T. The completion delay circuit CDC may determine an order for providing completions CPLTs corresponding to different tenants to the completion buffer BF_CPLT, based on different count values CVs. However, the scope of the present disclosure is not limited thereto.

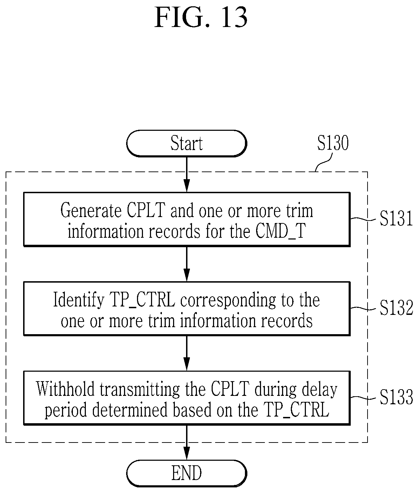

FIG. 13 is a flowchart illustrating the operation of a storage controller according to an embodiment of the present disclosure. Referring to FIGS. 1 to 13, operation S130 may include operations S131 to S133 below.

At operation S131, the storage controller 110 may generate one or more trim information records and completions CPLT for the trim command CMD_T. For example, the first core CR1 may generate a namespace identifier NSID and a trim load TL (e.g., a trim load value) by parsing a trim command CMD_T, and may generate a completion CPLT by processing the trim command CMD_T .

At operation S132, the storage controller 110 may identify a trim performance control value TP_CTRL corresponding to one or more trim information records. For example, the trim performance control circuit 111b_1 may identify one trim performance control entry TPCE included in the trim performance control table TBL_TPC based on the namespace identifier NSID and the trim load TL. The trim performance control circuit 111b_1 may identify a trim performance control value TP_CTRL included in an identified trim performance control entry TPCE.

At operation S133, the storage controller 110 may withhold transmission of the completion CPLT for a delay period determined based on the trim performance control value TP_CTRL. For example, the trim performance control circuit 111b_1 may determine the delay time length based on the trim performance control value TP_CTRL. The trim performance control circuit 111b_1 may not transmit the completion CPLT to the completion buffer BF_CPLT until the delay time length has elapsed from the beginning point of the delay period.

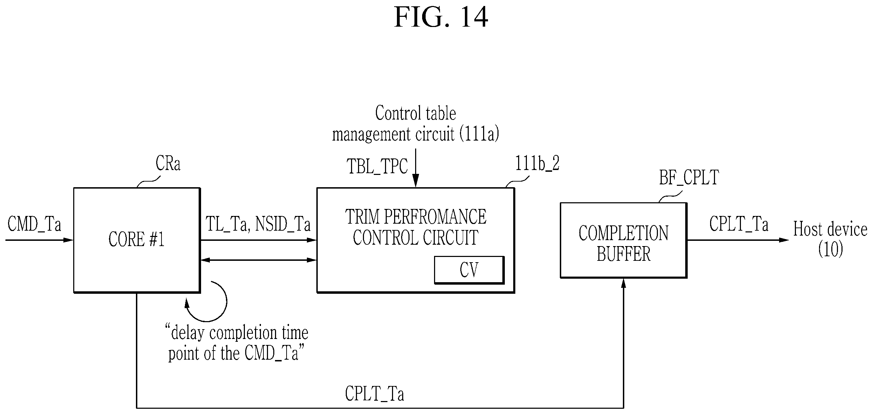

FIG. 14 is a diagram illustrating the operation of a storage controller based on a trim command according to an embodiment. Referring to FIGS. 1 to 8 and FIG. 14, the trim performance control circuit 111b of FIG. 2 may be implemented with the following trim performance control circuit 111b_2, and the first core CR1 of FIG. 3 may be implemented with the following first core CRa. Below, the differences between the trim performance control circuit 111b_1 and the trim performance control circuit 111b_2, and the differences between the first core CR1 and the first core CRa will be mainly described.

The first core CRa may receive a first trim command CMD _Ta from the command queue Q_CMD. The first core CRa may provide the first trim load TL_Ta and the first namespace identifier NSID_Ta generated by parsing the first trim command CMD_Ta to the trim performance control circuit 111b_2.

The first core CRa may generate a first completion CPLT_Ta after processing the first trim command CMD_Ta. The first core CRa may withhold transmission of the first completion CPLT_Ta to the completion buffer BF_CPLT based on the control of the trim performance control circuit 111b_2. For example, the first core CRa may not immediately transfer the first completion CPLT_Ta to the completion buffer BF_CPLT.

The trim performance control circuit 111b_2 may receive a trim performance control table TBL_TPC. The trim performance control circuit 111b_2 may identify one trim performance control value TP_CTRL based on the first trim load TL_Ta and the first namespace identifier NSID_Ta.

The trim performance control circuit 111b_2 may manage the count value CV. The trim performance control circuit 111b_2 may manage the count value CV in a token-based throttling manner. For example, the trim performance control circuit 111b_2 may increase the count value CV by '1' at regular time intervals determined based on the identified trim performance control value TP_CTRL. The trim performance control circuit 111b_2 may manage an upper limit value for the count value CV so that the count value CV does not increase beyond a specific value.

The first core CRa may access the count value CV. If the count value CV is greater than '0', the first core CRa may decrement the count value CV by '1' and provide the first completion CPLT_Ta to the completion buffer BF_CPLT. That is, when the first core CRa recognizes that the count value CV is greater than '0', the first core CRa may provide the first completion CPLT_Ta to the completion buffer BF_CPLT.

The completion buffer BF_CPLT may provide a first completion CPLT_Ta to the host device 10.

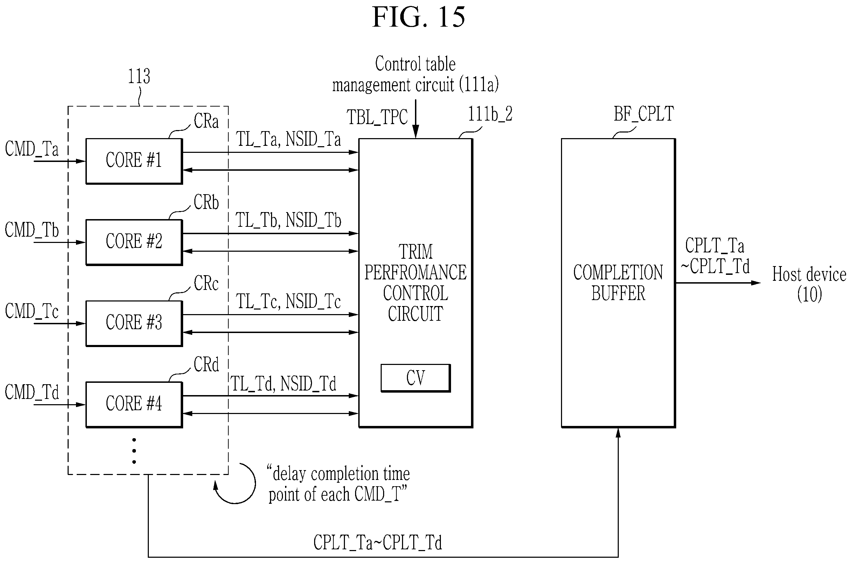

FIG. 15 is a diagram illustrating the operation of a storage controller based on a trim command according to an embodiment. Hereinafter, the operation of the storage controller 110 that holds the plurality of trim commands CMD_T will be described with reference to FIGS. 1 to 8 and FIGS. 14 to 15. The first to fourth cores CR1 to CR4 of FIG. 2 may be implemented as the following first to fourth cores CRa to CRd, respectively.

Each of the plurality of cores CR may receive a different trim command CMD_T from the command queue Q_CMD. For example, the first to fourth cores CRa to CRd may receive the first to fourth trim commands CMD_Ta to CMD_Td, respectively.

The first to fourth cores CRa to CRd may generate the first to fourth trim loads TL_Ta to TL_Td and the first to fourth namespace identifiers NSID_Ta to NSID_Td, respectively. The first to fourth cores CRa to CRd may provide first to fourth trim loads TL_Ta to TL_Td and first to fourth namespace identifiers NSID_Ta to NSID_Td to the trim performance control circuit 111b_2, respectively.

The first to fourth cores CRa to CRd may generate the first to fourth completions CPLT _Ta to CPLT_Td, respectively. Each of the first to fourth cores CRa to CRd may withhold transmission of the generated completion CPLT to the completion buffer BF_CPLT based on the control of the trim performance control circuit 111b_2.

The trim performance control circuit 111b_2 may receive a trim performance control table TBL_TPC. The trim performance control circuit 111b_2 may identify a trim performance control value TP_CTRL corresponding to each of the first to fourth trim commands CMD_Ta to CMD_Td based on the first to fourth trim loads TL_Ta to TL_Td and the first to fourth namespace identifiers NSID_Ta to NSID_Td. For example, the trim performance control circuit 111b_2 may determine a "representative trim performance control value" based on trim performance control values TP_CTRL corresponding to the first to fourth trim commands CMD_Ta to CMD_Td, respectively.

In an embodiment, if each of the first to fourth namespace identifiers NSID_Ta to NSID_Td corresponds to a namespace allocated to one tenant, the trim performance control circuit 111b_2 may determine a "representative trim performance control value" in various ways, such as a lowest value, a highest value, a median value, an average value, a weighted average value, etc., of the trim performance control values TP_CTRL corresponding to the first to fourth trim commands CMD _Ta to CMD_Td.

The trim performance control circuit 111b_2 may manage the count value CV. The trim performance control circuit 111b_2 may manage the count value CV in a token-based throttling manner. For example, the trim performance control circuit 111b_2 may increase the count value CV by '1' at regular time intervals determined based on a "representative trim performance control value." The trim performance control circuit 111b_2 may manage an upper limit value for the count value CV so that the count value CV does not increase above a specific value.

Each of the first to fourth cores CRa to CRd may access the count value CV. That is, each of the first to fourth cores CRa to CRd may share the count value CV. For example, each of the first to fourth cores CRa to CRd may access the count value CV at different time points. In other words, each of the first to fourth cores CRa to CRd may access the count value CV in a time-division manner.

If the count value CV is greater than '0', the core CR accessing the count value CV may decrement the count value CV by '1' and provide the pending completion CPLT to the completion buffer BF_CPLT. For a more detailed example, when the first core CRa accesses the count value CV when the count value CV is greater than '0', the first core CRa may decrement the count value CV by '1' and provide the first completion CPLT_Ta to the completion buffer BF_CPLT. When the second core CRb accesses the count value CV when the count value CV is greater than '0', the second core CRb may decrease the count value CV by '1' and provide the second completion CPLT_Tb to the completion buffer BF_CPLT. In this way, the first to fourth cores CRa to CRd may sequentially provide the first to fourth completions CPLT _Ta to CPLT_Td to the completion buffer BF_CPLT.

That is, according to the embodiments of FIGS. 14 to 15, unlike the embodiments described above with reference to FIGS. 9 to 12, the completion CPLT may be withheld in each core CR.

In an embodiment, each core CR may include a local command queue storing one or more commands CMD provided from a command queue Q_CMD. The local command queue may be implemented as a first-in first-out FIFO queue. In this case, the core CR who decided to withhold to transmit the completion CPLT may requeue the completion CPLT to its local command queue. In this case, the core CR will be able to access the count value CV when it accesses the completion CPLT again. However, the scope of the present disclosure is not limited thereto.

In an embodiment, each core CR may include a dedicated buffer space to store pending completions CPLT. In this case, the core CR who decided to withhold transmission of the completion CPLT may store the completion CPLT in the buffer space and then provide the completion CPLT to the completion buffer BF_CPLT when it is confirmed that the count value CV is greater than 0. However, the scope of the present disclosure is not limited thereto.

The completion buffer BF_CPLT may sequentially provide completions CPLT provided from the first to fourth cores CRa to CRd to the host device 10. For example, the completion buffer BF_CPLT may sequentially provide the first to fourth completions CPLT_Ta to CPLT_Td to the host device 10.

For a more concise explanation, an embodiment in which each core CR delays transmission of completion CPLT is described in FIGS. 14 and 15, but the scope of the present disclosure is not limited thereto. For example, each core CR may control the completion time of the trim command CMD_T in various ways, such as delaying the operation of unmapping the logical address and physical address corresponding to the trim command CMD_T, or delaying the parsing of the trim command CMD_T.

FIG. 16 is a diagram illustrating the operation of the host device of FIG. 1 according to an embodiment. Referring to FIGS. 1 to 16, the host device 10 may include a submission queue SQ and a completion queue CQ.

The submission queue SQ may store commands CMDs issued from each of the first to n-th tenants 11 to 1n. The submission queue SQ may sequentially store commands CMDs issued from the first to n-th tenants 11 to 1n under the control of the supervisor SV.

The supervisor SV may determine the order in which the first to n-th tenants 11 to 1n store commands CMDs in the submission queue SQ according to the QoS required by each of the first to n-th tenants 11 to 1n. For example, a supervisor SV may control tenants requiring high QoS to place commands CMDs in the submission queue SQ with a higher frequency than tenants requiring low QoS.

The completion queue CQ may store the plurality of completions CPLT provided from the storage controller 110. Under the control of the Supervisor SV, the completion queue CQ may sequentially provide each completion CPLT to the tenant that issued the corresponding command CMD.

According to an embodiment of the present disclosure, the time at which completion CPLT for a trim command CMD_T is provided from the storage controller 110 to the host device 10 may be delayed. In this case, the time point when the completion CPLT for the trim command CMD_T is stored in the completion queue CQ may be delayed, and the time point when the tenant that issued the trim command CMD_T receives the completion CPLT may be delayed.

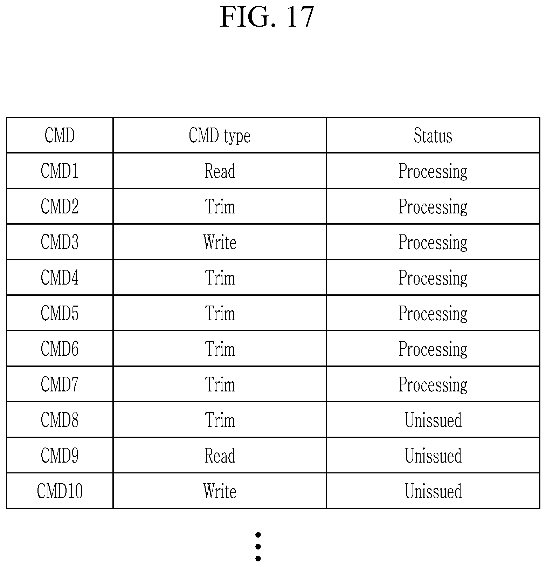

FIG. 17 is a diagram illustrating the operation of each tenant of FIG. 16 due to a delay in receiving completion for a trim command. Referring to FIGS. 1 to 17, if the time point at which a completion CPLT for a trim command CMD _T is stored in a completion queue CQ is delayed, the time point at which a tenant that issued the trim command CMD_T receives the completion CPLT may also be delayed. Below, for a more concise explanation, the operation of the first tenant 11 in the case where the storage controller 110 provides a completion CPLT for the trim command CMD_T issued by the first tenant 11 with delay is representatively described.

The first tenant 11 may manage the plurality of commands CMDs that the first tenant 11 has issued or is scheduled to issue. For example, the first tenant 11 may manage the first to seventh commands CMD1 to CMD7 provided to the submission queue SQ as commands being 'processing'. The first tenant 11 may manage the eighth to tenth commands CMD8 to CMD10 that have not yet been provided to the submission queue SQ as 'unissued' commands.

The storage controller 110 may delay the time point at which it returns the completion CPLT for the second command CMD2, which is a trim command CMD_T, to the host device 10. In this case, the time at which the completion CPLT for the second command CMD2 is provided to the first tenant 11 may be delayed, and the first tenant 11 may manage the second command CMD2 as a command being 'processed' for a longer time.

The first tenant 11 may determine the priority to be provided to the submission queue SQ of commands that are 'unissued' based on the ratio of trim commands CMD_T among the commands that are 'processing'. For example, if the ratio of trim commands CMD_T among the commands that are 'processing' is greater than a pre-determined value, the first tenant 11 may provide the trim commands CMD_T among the commands that are 'unissued' to the submission queue SQ with a low priority. For a more detailed example, the first tenant 11 may provide the ninth command CMD9 or the tenth command CMD10 to the submission queue SQ earlier than the eighth command CMD8. In this case, the eighth command CMD8 may be provided to the storage controller 110 later.

That is, according to the embodiment of the present disclosure, since the completion CPLT for the trim command CMD_T issued from the first tenant 11 is stored late in the completion queue CQ, the possibility that the first tenant 11 will additionally issue the trim command CMD_T may be reduced. In this case, the resources used by the storage controller 110 to process the trim commands CMD_T issued from the first tenant 11 may be reduced.

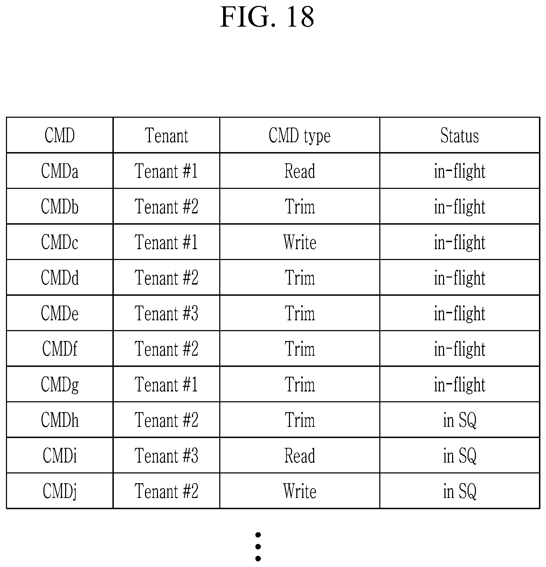

FIG. 18 is a drawing illustrating the operation of the supervisor of FIG. 16 due to a delay in receiving completion for a trim command. Referring to FIGS. 1 to 18, a supervisor SV may manage the plurality of commands CMDs to be processed. For example, the supervisor SV may manage uncompleted commands which are already transmitted from the host device 10, and manage commands CMDs scheduled to be transmitted from the host device 10.

The supervisor SV may manage the status of commands CMDs issued by all tenants. For example, the supervisor SV may manage the first to seventh commands CMDa to CMDg as in-flight commands after they are transmitted from the submission queue SQ to the storage controller 110 but before corresponding completion CPLT is provided to the tenant. The supervisor SV may manage the eighth to tenth commands CMDh to CMDj stored in the submission queue SQ as in-submission queue (in-SQ) commands.

The storage controller 110 may delay the time point at when it returns the completion CPLT for the second command CMDb, which is a trim command CMD_T, to the host device 10. In this case, the time at which the completion CPLT for the second command CMDb is provided to the second tenant 12 may be delayed. In this case, the time taken for the supervisor SV to manage the second command CMDb as an in-flight command may be long.

The supervisor SV may limit the number (or ratio) of commands CMDs issued from each of the first to n-th tenants 11 to 1n among a plurality of commands CMDs to be processed. For example, the supervisor SV may limit a number (or ratio) of commands CMDs issued from specific tenants among in-flight commands and in-submission queue (in-SQ) commands based on the QoS required by each of the first to n-th tenants 11 to 1n. For a more detailed example, the supervisor SV may limit the number (or rate) of commands CMDs issued from the second tenant 12 with a certain number. In this case, as the time for the second command CMDb to be managed as an in-flight command increases, the supervisor SV may control the command CMD issued from the second tenant 12 not to be additionally stored in the submission queue SQ.

That is, according to the embodiment of the present disclosure, since the completion CPLT for the trim command CMD_T issued from the second tenant 12 is stored late in the completion queue CQ, the possibility that the trim command CMD_T issued from the second tenant 12 will be additionally stored in the submission queue SQ may be reduced. In this case, the resources used by the storage controller 110 to process the trim command CMD_T issued from the second tenant 12 may be reduced.

For a more concise explanation, the operation of a host device 10 that receives a completion CPLT for a trim command CMD_T late is exemplarily described with reference to FIGS. 16 to 18. However, the scope of the present disclosure is not limited thereto. For example, the scope of the present disclosure is not limited to a specific operation method of a host device 10 that receives a completion CPLT for a trim command CMD_T late, and will not be limited to a specific reason why resource over-occupancy of a storage controller 110 due to processing of a trim command CMD_T is minimized according to the operation of the host device 10.

At least one of the components, elements, modules, circuits, buffers, managers, cores, etc. (collectively "components" in this paragraph) represented by a block in the drawings such as FIGS. 1-3, 9-11, and 14-16 may use and/or include a direct circuit structure, such as a memory, a processor, a logic circuit, a look-up table, etc. that may execute the respective functions through controls of one or more microprocessors or other control apparatuses. Also, at least one of these components may be specifically embodied by a module, a program, or a part of code, which contains one or more executable instructions for performing specified logic functions, and executed by one or more microprocessors or other control apparatuses. Further, at least one of these components may include or may be implemented by a processor such as a central processing unit (CPU), a microprocessor, or the like that performs the respective functions.

## Claims

1. A storage controller (110) configured to communicate with a host device (10), comprising:
a completion buffer (BF_CPLT) configured to:
store one or more completions (CPLT), and
transmit the one or more completions (CPLT) to the host device (10);
a first core (CR1) configured to:
generate a first completion (CPLT _T1) and a first trim load value (TL_T1), both corresponding to a first trim command (CMD_T1) received from the host device (10); and
a trim performance control circuit (111b) connected to both the completion buffer (BF_CPLT) and the first core (CR1), wherein the trim performance control circuit (111b) is configured to:
delay transmission of the first completion (CPLT_T1) to the completion buffer (BF_CPLT) based on the first trim load value (TL_T1).

2. The storage controller (110) of claim 1, wherein the trim performance control circuit (111b) is configured to:
determine a first delay time length for delaying transmission of the first completion (CPLT_T1) to the completion buffer (BF_CPLT) based on a size of the first trim load value (TL_T1).

3. The storage controller (110) of claim 2, further comprising:
control table management circuit (111a) configured to store a trim performance control table (TBL_TPC), the trim performance control table (TBL_TPC) comprising a plurality of trim performance control values (TP_CTRL) associated with a plurality of trim load ranges respectively,
wherein the trim performance control circuit (111b) is configured to:
determine the first delay time length based on a first trim performance control value (TP_CTRL) corresponding to a first trim load range comprising the first trim load value (TL_T1) among the plurality of trim load ranges.

4. The storage controller (110) of claim 2 or 3, further comprising:
a second core (CR2) configured to:
generate a second completion (CPLT_T2) and a second trim load value (TL_T2), both corresponding to a second trim command received from the host device (10),
wherein the trim performance control circuit (111b) is further configured to:
determine the first delay time length based on the second trim load value (TL_T2); and
determine a second delay time length for delaying transmission of the second completion (CPLT_T2) to the completion buffer (BF_CPLT) based on the first trim load value (TL_T1) and the second trim load value (TL_T2).

5. The storage controller (110) of claim 4, wherein the trim performance control circuit (111b) comprises:
a counter (CNT) configured to manage a count value (CV);
a delay control circuit (DCC) configured to:
identify a representative trim performance control value (TP_CTRL) based on the first trim load value (TL_T1) and the second trim load value (TL_T2), and
increase the count value (CV) with a first period, wherein the first period is based on the representative trim performance control value (TP_CTRL); and
a completion delay circuit (CDC) configured to:
store the first completion (CPLT_T1) and the second completion (CPLT_T2),
based on the count value (CV) being greater than a first value, decreasing the count value (CV) and transmitting one of the first completion (CPLT_T1) and the second completion (CPLT_T2) to the completion buffer (BF_CPLT).

6. The storage controller (110) of claim 4 or 5, wherein:
based on the first trim load range comprising the first trim load value (TL_T1) and the second trim load value (TL_T2), the trim performance control circuit (111b) is further configured to determine the first delay time length and the second delay time length based on the first trim performance control value (TP_CTRL).

7. The storage controller (110) of any one of claims 3 to 6, further configured to update the trim performance control table (TBL_TPC) in response to a request from the host device (10).

8. The storage controller (110) of claim 7, further configured to:
receive an update request for the trim performance control table (TBL_TPC) from a supervisor (SV) of the host device (10), and
receive the first trim command (CMD_T1) from a tenant (11) of the host device (10), the tenant (11) being one of a plurality of tenants (11-1n) of the host device (10).

9. The storage controller (110) of any one of claims 2 to 8, wherein:
the first core (CR1) is further configured to transmit the first namespace identifier (NSID_T1, NSID_Ta) comprised in the first trim command (CMD_T1) to the trim performance control circuit (111b),
the trim performance control circuit (111b) is further configured to determine the first delay time length based on the first namespace identifier (NSID_T1, NSID_Ta).

10. The storage controller (110) of any one of claims 2 to 9, wherein the first core (CR1) is further configured to identify the first trim load value (TL_T1) based on a total capacity of logical blocks associated with the first trim command (CMD_T1).

11. The storage controller (110) of any one of claims 2 to 10, wherein the trim performance control circuit (111b) is further configured to transmit the first completion (CPLT_T1) to the completion buffer (BF_CPLT) at a time when the first delay time length has elapsed from a beginning of a delay period,
wherein the beginning of the delay period is one of:
a first time at which the first trim command (CMD_T1) is received from the host device (10);
a second time at which the first trim command (CMD_T1) is received by the first core (CR1);
a third time at which the first completion (CPLT_T1) is generated; and
a fourth time at which the first completion (CPLT_T1) is provided to the trim performance control circuit (111b).

12. The storage controller (110) of any one of claims 1 to 11, wherein:
the first core (CR1) is further configured to generate an input/output completion (CPLT _IO) associated with an input/output command received from the host device (10),
wherein the first completion (CPLT_T1) is transmitted to the completion buffer (BF_CPLT) based on a first path and the input/output completion (CPLT _IO) is transmitted to the completion buffer (BF_CPLT) based on a second path different from the first path.

13. An operation method of a storage controller (110), comprising:
receiving (S120) a trim command (CMD_T) from a host device (10);
generating (S131) a completion and one or more trim information records associated with the trim command (CMD_T);
identifying (S132) a trim performance control value (TP_CTRL) corresponding to the one or more trim information records; and
delaying (S133) transmission of the completion to the host device (10) for a delay period determined based on the trim performance control value (TP_CTRL).

14. The operation method of claim 13, further comprising:
transmitting the completion to the host device (10) after the delay period.

15. The operation method of claim 13 or 14, wherein:
the one or more trim information records includes:
at least one of a namespace identifier (NSID) associated with the trim command (CMD_T) and a trim load value (TL) associated with the trim command (CMD_T).
